# EUROPÄISCHE PATENTANMELDUNG

(11) **EP 4 506 285 A1**
(43) Veröffentlichungstag der Anmeldung: **12.02.2025**
(21) Anmeldenummer: 24187590.5
(22) Anmeldetag: 10.07.2024
(51) Int. Cl.: B65G 54/02

(54) **LÄUFER FÜR EIN TRANSPORTSYSTEM UND TRANSPORTSYSTEM**

(30) Priorität: 10.08.2023 DE 102023121400
(71) Anmelder: TAKTOMAT kurvengesteuerte Antriebssysteme GmbH, 86554 Pöttmes (DE)
(72) Erfinder: Hofstetter, Norbert, 86676 Ehekirchen (DE)
(74) Vertreter: Glück Kritzenberger Patentanwälte PartGmbB

(57) **Zusammenfassung**

Die Erfindung bezieht sich darauf, ein Transportsystem zur Beförderung von Gegenständen entlang einer Transportstrecke vorzusehen, wenigstens umfassend eine ortsfeste Laufschiene und zumindest einen entlang der Laufschiene bewegbaren Läufer zum Befördern der Gegenstände entlang der Transportstrecke, ferner umfassend einen elektromagnetischen Antrieb zum Antreiben des zumindest einen Läufers mittels elektromagnetischer Kräfte, wobei der elektromagnetische Antrieb eine Vielzahl von ortsfesten Spulenelementen und zumindest einen Permanentmagneten aufweist. Dabei sind die ortsfesten Spulenelemente an der ortsfesten Laufschiene und der zumindest eine Permanentmagnet an dem zumindest einem Läufer vorgesehen. Der Erfindung bezieht sich außerdem auf einen Läufer zur Verwendung in einem solchen Transportsystem, der mehrere um jeweilige Gelenkachsen verschwenkbare Führungs- und Lagereinrichtungen aufweist.

## Beschreibung

Die vorliegende Erfindung betrifft einen Läufer für ein Transportsystem zur Beförderung von Gegenständen entlang einer Transportstrecke sowie ein Transportsystem mit einem derartigen Läufer. Mehr im Detail betrifft die vorliegende Erfindung ein Transportsystem mit einem verbesserten, elektromagnetischen Antriebssystem, insbesondere mit einem verbesserten Läufer.

Umlaufende Transportvorrichtungen sind aus dem Stand der Technik in verschiedenen Ausgestaltungen bekannt. Beispielsweise zeigt die US 6 876 107 B2 eine umlaufende Transportvorrichtung, bei der an der Transportstrecke eine Vielzahl von Spulen angeordnet sind. Die Spulen sind dabei unmittelbar benachbart zueinander angeordnet und sind in einem Kurvenbereich der Transportstrecke derart ausgebildet, dass dort eine unmittelbare Nebeneinanderanordnung sichergestellt ist. Dabei weisen die Spulen aus der Draufsicht betrachtet eine sich in Richtung der Kurveninnenseite verjüngende Gestalt auf.

Häufig kommen in Anwendungen wie in der US 6 876 107 B2 elektromotorische Antriebe zum Einsatz, bei denen ein aktiver, bestromter Teil stationär ausgebildet ist, d.h. als Stator fungiert, und zumindest ein passiver, nicht bestromterTeil bewegt wird, welcher als Läufer, Mover oder Shuttle bezeichnet wird. Häufig tragen derartige Läufer zumindest einen Permanentmagneten, der zusammen mit dem stationär angeordneten Stator einen elektromagnetischen Antrieb zum Antreiben des zumindest einen Läufers mittels elektromagnetischer Kräfte ausbildet. Der Stator kann beispielsweise in Form von einer ortsfesten Laufschiene ausgebildet sein, an der eine Vielzahl von ortsfesten Spulenelementen vorgesehen sind.

Nachteilig an den bekannten Lösungen ist eine unzureichende mechanische Stabilität zum Transportieren von schwereren Lasten als Gegenstände mittels des zumindest einen Läufers entlang der Laufschiene. Auch für den Transport von schweren Gegenständen mittels des zumindest einen Läufers sollte dabei ein hochpräzise und möglichst toleranzfreie Führung des Läufers entlang der Transportstrecke möglich sein.

Zur Verbesserung der mechanischen Stabilität werden, wie beispielsweise aus DE 10 2020 108 510 B3 bekannt, Rollenanordnungen am Läufer bereitgestellt, die mit Führungsflächen bzw. Führungsschienen des Transportsystems verspannt sind, um eine möglichst spielfreie und damit präzise Führung des Läufers im Transportsystem zu gewährleisten.

Ferner ist aus der EP 4 219 359 A1 ein Fördersystem und ein bewegliches Element dafür bekannt geworden, wobei das bewegliche Element Folgendes umfasst: einen Körper; mindestens ein Schräglager, das so konfiguriert ist, dass es an einem ersten Abschnitt einer ersten Führungsschiene des Fördersystems anliegt; und einen am Körper vorgesehenen Gelenkmechanismus, der eine Drehung des Schräglagers ermöglicht, so dass eine Kontaktlinie des Schräglagers mit der ersten Führungsschiene in einem Winkel von 90 Grad zu einer Bewegungsrichtung des Schräglagers und parallel zu einer Drehachse des Schräglagers bleibt. Der Gelenkmechanismus kann einen Lagerkörper und ein drittes Lager umfassen, wobei der Lagerkörper das Schräglager stützt und sich um eine Gelenkachse dreht, oder er kann einen Zapfen und eine Zapfenstütze mit einem virtuellen Drehpunkt an einem Kontaktzentrum des Schräglagers und der Führungsschiene umfassen.

Jedoch führt die Anwendung einer spielfreien Führung bei einem derartig ausgebildeten Transportsystem insbesondere in nicht-linearen Abschnitten der Transportstrecke, insbesondere in Kurven- oder Bogenabschnitten der Transportstrecke zu einem hohen Verschleiß der Rollen. Bei Fortschreiten der Abnutzung der Rollen wird die spielfreie Führung der Rollen des Läufers durch den erhöhten Verschleiß negativ beeinflusst, sodass die mechanische Stabilität und Präzision der Führung des Läufers mit fortschreitender Einsatzdauer im Transportsystem abnimmt.

Aufgabe der vorliegenden Erfindung ist es daher, einen Läufer für ein Transportsystem zur Beförderung von Gegenständen entlang einer Transportstrecke und ein solches Transportsystem aufzuzeigen, welcher/welches sich auch bei einem Transport von schwereren Gegenständen durch eine hochpräzise, verschleißarme und nahezu toleranzfreie Führung der Transportpaletten auszeichnet. Zur Lösung dieser Aufgabe ist ein Läufer entsprechend Patentanspruch 1 sowie ein Transportsystem entsprechend dem Patentanspruch 11 ausgebildet. Die Unteransprüche betreffen dabei besonders vorteilhafte Ausführungsvarianten der Erfindung.

Der wesentliche Aspekt der vorliegenden Erfindung ist darin zu sehen, einen Läufer für ein Transportsystem zur Beförderung von Gegenständen entlang einer Transportstrecke in zumindest einer Transportrichtung bereitzustellen. Im Sinne der vorliegenden Offenbarung ist unter "Transportrichtung" die Richtung zu verstehen, in der sich der Läufer, insbesondere der geometrische Mittelpunkt des Läufers und/oder der Massemittelpunkt des Läufers, bei der Beförderung von Gegenständen bewegt. Folglich entspricht die Transportrichtung bei einer Geradeausfahrt einem in Richtung der Transportstrecke orientierten Vektor und bei einer Kurvenfahrt in einem Bogenabschnitt der Transportstrecke einem tangential zur Kurvenbahn orientierten Vektor.

Der Läufer weist zumindest einen Permanentmagneten und einen Grundkörper mit einer ersten Seite und einer der ersten Seite bezüglich einer die zumindest eine Transportrichtung beinhaltenden Mittelebene gegenüberliegenden zweiten Seite auf. Folglich sind sowohl die erste Seite als auch die zweite Seite des Grundkörpers senkrecht zur Mittelebene gesehen von dieser beabstandet. Bevorzugt ändert die Mittelebene ihre Orientierung bei einer Bewegung des Läufers entlang der Transportstrecke in der zumindest einen Transportrichtung nicht.

Der am Grundkörper vorgesehene Permanentmagnet ist, wie im einleitenden Teil ausgeführt, zum Ausbilden eines elektromagnetischen Antriebes geeignet, beispielsweise wenn der Läufer in Kombination mit einem Stator, beispielsweise mit einer Vielzahl von ortsfesten Spulenelementen betrieben wird.

An der ersten Seite des Grundkörpers sind zumindest eine erste Führungs- und Lagereinrichtung und eine zweite Führungs- und Lagereinrichtung angeordnet, wobei die zweite Führungs- und Lagereinrichtung von der ersten Führungs- und Lagereinrichtung in Transportrichtung beabstandet ist. An der zweiten Seite des Grundkörpers ist zumindest eine dritte Führungs- und Lagereinrichtung angeordnet.

Die Form des Grundkörpers ist grundsätzlich frei wählbar, solange zwei einander gegenüberliegende Seiten bereitgestellt sind, an denen Führungs- und Lagereinrichtungen angeordnet sein können. Der Grundkörper kann beispielsweise im Wesentlichen quaderförmig ausgestaltet sein, wobei an zwei einander gegenüberliegenden Seiten des Quaders Führungs- und Lagereinrichtungen angeordnet sind. Jedoch sind auch komplexere geometrische Formen für den Grundkörper vorstellbar. Auch wenn es in der Mehrzahl der Ausführungsvarianten praktikabel erscheinen dürfte, ist es nicht zwingend erforderlich, dass die erste und zweite Seite des Grundkörpers parallel zueinander ausgerichtet sind.

Der Läufer, insbesondere der Grundkörper des Läufers und/oder die Anordnung der Führungs- und Lagereinrichtungen, kann in einer bevorzugten Ausführungsform bezüglich der Mittelebene symmetrisch aufgebaut sein, jedoch ist dies keine zwingende Voraussetzung. Im Falle einer symmetrischen Anordnung sind die erste und die zweite Seite des Grundkörpers von der Mittelebene gleich weit beabstandet und gleichen einander im Aufbau.

Im Falle einer asymmetrischen Anordnung kann beispielsweise zwischen der ersten Seite des Grundkörpers und der Mittelebene ein anderer Abstand vorhanden sein als zwischen der zweiten Seite des Grundkörpers und der Mittelebene. Auch können an erster und zweiten Seite eine unterschiedliche Anzahl an Führungs- und Lagereinrichtungen angeordnet sein und/oder diese können an der jeweiligen Seite verschieden positioniert sein.

Die erste und die zweite Führungs- und Lagereinrichtung sind um eine jeweilige erste bzw. zweite Gelenkachse, die lotrecht zur Mittelebene ausgerichtet ist, schwenkbar ausgebildet bzw. schwenkbar am Grundkörper angeordnet. Aufgrund der bevorzugt gleichbleibenden Orientierung der Mittelebene behalten in einer bevorzugten Ausführungsform auch die erste und die zweite Gelenkachse ihre Orientierung bei, wenn der Läufer entlang der Transportstrecke bewegt wird. Die erste und die zweite Gelenkachse erstrecken sich damit wie die Mittelebene während der gesamten Bewegung des Läufers entlang der Transportstrecke lotrecht zur zumindest einen Transportrichtung.

Die erste und die zweite Führungs- und Lagereinrichtung weisen jeweils zumindest eine erste und eine zweite drehbare Laufrolle auf, deren Rotationsachsen zur jeweiligen Gelenkachse in bezüglich der Transportrichtung entgegengesetzte Richtungen parallelverschoben sind, wodurch die Rotationsachse einer Laufrolle zur Rotationsachse der jeweils anderen Laufrolle in Transportrichtung beabstandet ist.

Die erste und die zweite Führungs- und Lagereinrichtung weisen ferner zumindest eine weitere drehbare Laufrolle auf, deren Rotationsachse vorzugsweise lotrecht zur jeweiligen Gelenkachse ausgerichtet ist, sodass die Rotationsachse der weiteren Laufrolle um die jeweilige Gelenkachse schwenkbar ausgebildet ist.

Vorzugsweise ist die Rotationsachse der weiteren Laufrolle mittig zwischen den Rotationsachsen der ersten Laufrolle und der zweiten Laufrolle angeordnet, d.h. die Rotationsachse der weiteren Laufrolle ist gleich weit von der Rotationsachse der ersten Laufrolle beabstandet wie von der Rotationsachse der zweiten Laufrolle. Weiter bevorzugt schneidet die Rotationsachse der weiteren Laufrolle die jeweilige Gelenkachse der Führungs- und Lagereinrichtung. So kann, wie im Folgenden näher ausgeführt, eine besonders genaue und zuverlässige Ausrichtung der weiteren Laufrolle erfolgen, wobei gleichzeitig eine vorteilhafte Konstruktion des Läufers, die insbesondere kostengünstig ist und einen vorteilhaften Kraftfluss aufweist, realisierbar ist.

Wie eingangs bereits schemenhaft beschrieben, unterliegen insbesondere die weiteren Laufrollen in Ausführungsformen gemäß dem Stand der Technik in Bogenabschnitten der Transportstrecke einer erhöhten Abnutzung. Die Erfinder haben ermittelt, dass die erhöhte Abnutzung durch einen Schlupf der weiteren Laufrollen begründet ist, der daraus resultiert, dass der Läufer bei einer Bewegung entlang eines Bogenabschnittes eine Rotation um den Mittelpunkt des Bogenabschnittes ausführt. Durch die Überlagerung von rotatorischen und translatorischen Bewegungskomponenten entspricht die Bewegungsrichtung des Läufers an der Stelle, an der die weiteren Laufrollen angeordnet sind, nicht der Abrollrichtung der weiteren Laufrollen.

Um diesem Problem zu begegnen, wurde die Lösung identifiziert, die erste und zweite Führungs- und Lagereinrichtung bezüglich einer jeweiligen ersten und zweiten Gelenkachse schwenkbar auszubilden. Damit ist jeweils auch die mit der ersten und zweiten Führungs- und Lagereinrichtung verschwenkbare Rotationsachse der weiteren Laufrolle um die Gelenkachse verschwenkbar ausgebildet. Die Ausrichtung der Rotationsachse ist folglich an den nicht-linearen Verlauf der Transportstrecke anpassbar und wird durch den Verlauf von entlang der Transportstrecke angeordneten Führungsschienen vorgegeben, sodass die Rotationsachse der weiteren Laufrolle zum Mittepunkt eines Bogenabschnittes, der vom dem Läufer durchlaufen wird, ausrichtbar ist.

Durch den Abstand in Transportrichtung, den die Rotationsachsen der ersten und der zweiten Laufrollen zueinander aufweisen und die beidseitige Anordnung der ersten und zweiten Laufrolle bezüglich der Gelenkachse, wird die Schwenkstellung der ersten und der zweiten Führungs- und Lagereinrichtung um die jeweilige Gelenkachse festgelegt, wenn die erste und die zweite Laufrolle in Anlage mit einer Führungsfläche einer Führungsschiene gebracht sind. Die sich einstellende Schwenkstellung der ersten und zweiten Führungs- und Lagereinrichtung ist das Ergebnis eines Momentengleichgewichts, das durch die entgegensetzen Reaktionskräfte hervorgerufen wird, die zwischen der Führungsfläche und der mit der Führungsfläche in Kontakt stehenden ersten Laufrolle bzw. der mit der Führungsfläche in Kontakt stehenden zweiten Laufrolle vorherrschen.

Folglich ist die Schwenkstellung abhängig von den zwischen der Führungsfläche und der ersten bzw. zweiten Laufrolle entstehenden Kräften und vom Hebelarm, den die Rotationsachse der ersten bzw. zweiten Laufrolle zur Gelenkachse aufweist. Die erste und die zweite Führungs- und Lagereinrichtung können dabei einen solchen Schwenkzustand einnehmen, bei dem die von der ersten und zweiten Laufrolle hervorgerufenen Momente um die Gelenkachse gleich hoch sind.

Bei einer Änderung des Verlaufs der Führungsfläche, von der die Laufrollen geführt sind, beispielsweise bei einem Übergang von einem Geradenabschnitt der Transportstrecke in einen Bogenabschnitt der Transportstrecke, ändern sich die auf die Laufrollen wirkenden Kräfte. Mit den Kräften kann sich das Verhältnis der Drehmomente, die die Laufrollen um die jeweilige Gelenkachse hervorrufen, ändern, was wiederum eine Änderung der Schwenkstellung der ersten bzw. zweiten Führungs- und Lagereinrichtung bewirkt.

Hierbei werden sich die erste und die zweite Führungs- und Lagereinrichtung derart ausrichten, dass sich ein Gleichgewicht zwischen den um die jeweilige Gelenkachse hervorgerufenen Drehmomenten einstellt. Dies kann bei einer entsprechenden Dimensionierung der Hebelverhältnisse an der ersten und zweiten Führungs- und Lagereinrichtung beispielsweise der Fall sein, wenn die Führungs- und Lagereinrichtungen eine Schwenkstellung einnehmen, in der die Rotationachse der weiteren Laufrolle, die bevorzugt zu den Rotationsachsen der ersten und zweiten Laufrolle senkrecht ausgerichtet ist, bei einer Geradeausfahrt vorzugsweise lotrecht zur Führungsfläche ausgerichtet ist und bei einer Kurvenfahrt entlang eines Bogenabschnittes in Richtung des Kurvenmittelpunkts ausgerichtet ist.

Die dritte Führungs- und Lagereinrichtung weist zumindest eine erste drehbare Laufrolle auf, deren Rotationsachse parallel zu den Gelenkachsen ausgerichtet ist, und weist zumindest eine weitere drehbare Laufrolle auf, deren Rotationsachse vorzugsweise lotrecht zu den Gelenkachsen ausgerichtet ist.

Durch die dritte Führungs- und Lagereinrichtung wird eine Möglichkeit zur Führung des Läufers an der zweiten Seite des Grundkörpers bereitgestellt. Wenn der Läufer entlang eines Geradenabschnittes der Transportstrecke mit einer entsprechenden Führung eines Transportsystems zusammenwirkt, ist er folglich lediglich entlang eines einzigen Freiheitsgrades, d.h. in Transportrichtung, bewegbar. Die übrigen beiden translatorischen sowie drei rotatorischen Freiheitsgrade sind durch das Zusammenwirken der Laufrollen der ersten, zweiten und dritten Führungs- und Lagereinrichtung mit der Führung des Transportsystems unterbunden. Entsprechend ist die Bewegung des Läufers entlang eines Bogenabschnittes der Transportstrecke geführt.

Durch die schwenkbaren ersten und zweiten Führungs- und Lagereinrichtungen sind die an diesen Führungs- und Lagereinrichtungen angeordneten weiteren Laufrollen bei einer Bewegung des Läufers entlang eines Bogenabschnittes der Transportstrecke zum Kurvenmittelpunkt hin ausgerichtet. Mithin rollt die jeweilige weitere Laufrolle entlang ihrer gesamten Breite auf der von einer Führungsschiene bereitgestellten Führungsfläche ab und das Abrollen wird nicht durch das Auftreten von Schlupf verhindert oder überlagert. Folglich wird der Verschleiß der weiteren Laufrollen minimiert, die durch Verschleißrückstände hervorgerufene Verschmutzung wird reduziert und die Genauigkeit der Führung wird verbessert.

Somit stellt der bereitgestellte Läufer eine Lösung dar, um auch bei einem Transport von schwereren Gegenständen eine hochpräzise, verschleißarme und nahezu toleranzfreie Führung der Bewegung des Läufers zu ermöglichen.

Gemäß einer vorteilhaften Ausführungsvariante kann dabei vorgesehen sein, dass die dritte Führungs- und Lagereinrichtung nicht verschwenkbar am Läufer angeordnet ist. Die Rotationsachse der weiteren Laufrolle kann lotrecht zu einer von der ersten und zweiten Gelenkachse aufgespannten Achsebene ausgerichtet sein und die Rotationsachse der ersten drehbaren Laufrolle der dritten Führungs- und Lagereinrichtung schneiden.

Gemäß einer weiteren vorteilhaften Ausführungsvariante kann dabei vorgesehen sein, dass die dritte Führungs- und Lagereinrichtung in Transportrichtung gesehen mittig zwischen der ersten und der zweiten Gelenkachse am Läufer angeordnet ist, sodass die Rotationsachsen der ersten Laufrolle und der weiteren Laufrolle der dritten Führungs- und Lagereinrichtung von der ersten Gelenkachse in Transportrichtung gesehen genauso weit beabstandet sind wie von der zweiten Gelenkachse.

Wenn der Läufer einen nicht-linearen Abschnitt der Transportstrecke durchläuft, bewegt sich ein mittig zwischen der ersten und zweiten Gelenkachse angeordneter Massepunkt in Transportrichtung des Läufers. Wenn die Rotationsachse der weiteren Laufrolle der dritten Führungs- und Lagereinrichtung also mittig zwischen der ersten und zweiten Gelenkachse angeordnet ist, entspricht die Abrollrichtung der weiteren Laufrolle der dritten Führungs- und Lagereinrichtung der Bewegungsrichtung des eben definierten Massepunkts. Die Rotationsachse der weiteren Laufrolle der dritten Führungs- und Lagereinrichtung ist durch die mittige Positionierung zwischen den Gelenkachsen automatisch zum Mittelpunkt des nicht-linearen Abschnittes der Transportstrecke ausgerichtet. Folglich wird Schlupf zwischen der weiteren Laufrolle und einer Führungsschiene eines Transportsystems, mit der die weitere Laufrolle in Wirkverbindung steht, reduziert bzw. minimiert.

Somit ergibt sich für den Läufer ein bezüglich der Mittelebene unsymmetrischer Aufbau, wobei die Rotationsachsen der weiteren Laufrollen der an der ersten Seite des Grundkörpers angeordneten ersten und zweiten Führungs- und Lagereinrichtungen durch ein Verschwenken der jeweiligen Führungs- und Lagereinrichtung zum Mittelpunkt eines nicht-linearen Abschnittes der Transportstrecke hin ausgerichtet sind. Die Rotationsachse der weiteren Laufrolle der an der zweiten Seite des Grundkörpers angeordneten dritten Führungs- und Lagereinrichtung erfährt keine Ausrichtung, ist durch ihre mittige Anordnung aber ohnehin zum Mittelpunkt eines nicht-linearen Abschnittes der Krümmungsbahn hin ausgerichtet.

In vorteilhafter Weise wird somit ein Läufer bereitgestellt, der bei einer Führung in einem Transportsystem lediglich einen geringen Grad an Überbestimmtheit aufweist. Ferner weist der Läufer lediglich wenig bewegte Teile auf, weswegen die Führung aufgrund der niedrigen Montagetoleranzen mit einer hohen Genauigkeit erfolgen kann.

Gemäß einer weiteren vorteilhaften Ausführungsvariante kann dabei vorgesehen sein, dass die dritte Führungs- und Lagereinrichtung in Transportrichtung bezüglich einer zur ersten und zweiten Gelenkachse parallelen dritten Gelenkachse verschwenkbar ausgebildet ist und eine zweite drehbare Laufrolle aufweist, wobei die Rotationsachsen der ersten und zweiten Laufrolle der dritten Führungs- und Lagereinrichtung zur dritten Gelenkachse in bezüglich der Transportrichtung entgegengesetzte Richtungen parallelverschoben sind, wodurch die Rotationsachse einer Laufrolle zur Rotationsachse der jeweils anderen Laufrolle in Transportrichtung beabstandet ist, sodass die Rotationsachse der weiteren Laufrolle um die dritte Gelenkachse schwenkbar ausgebildet ist.

Vorzugsweise ist die Rotationsachse der weiteren Laufrolle der dritten Führungs- und Lagereinrichtung mittig zwischen den Rotationsachsen der ersten Laufrolle und der zweiten Laufrolle angeordnet, d.h. die Rotationsachse der weiteren Laufrolle ist gleich weit von der Rotationsachse der ersten Laufrolle beabstandet wie von der Rotationsachse der zweiten Laufrolle. Weiter bevorzugt schneidet die Rotationsachse der weiteren Laufrolle die Gelenkachse der dritten Führungs- und Lagereinrichtung. Dies bringt die bereits im Zusammenhang mit der ersten und zweiten Führungs- und Lagereinrichtung beschriebenen Vorteile mit sich.

Ähnlich dem Funktionsprinzip der an der ersten Seite des Grundkörpers angeordneten ersten und zweiten Führungs- und Lagereinrichtung ist folglich die Rotationsachse der weiteren Laufrolle der dritten Führungs- und Lagereinrichtung in dieser Ausführungsform entsprechend des Verlaufs eines nicht-linearen Abschnittes der Transportstrecke, insbesondere zum Mittelpunkt eines Bogenabschnittes der Transportstrecke hin, ausrichtbar, sodass die Flexibilität beim Einsatz des Läufers verbessert wird.

Gemäß einer nochmals weiteren vorteilhaften Ausführungsvariante kann dabei vorgesehen sein, dass die dritte Gelenkachse der dritten Führungs- und Lagereinrichtung in Transportrichtung gesehen mittig zwischen der ersten und der zweiten Gelenkachse am Läufer angeordnet ist, sodass die dritte Gelenkachse von der ersten Gelenkachse in Transportrichtung gesehen genauso weit beabstandet ist wie von der zweiten Gelenkachse.

Ähnlich zur vorstehend beschriebenen Ausführungsvariante mit mittig angeordneter, nicht schwenkbarer Rotationsachse der weiteren Laufrolle der dritten Führungs- und Lagereinrichtung erfolgt eine Anordnung der dritten Führungs- und Lagereinrichtung mittig zwischen der ersten und zweiten Gelenkachse. Aufgrund der Schwenkbarkeit der dritten Führungs- und Lagereinrichtung sind jedoch nicht die Rotationsachsen der ersten und/oder zweiten Laufrolle am mittigen Punkt zwischen der ersten und zweiten Führungs- und Lagereinrichtung angeordnet, sondern die dritte Gelenkachse, um die die dritte Führungs- und Lagereinrichtung schwenkbar ist. Aus den bereits beschriebenen Gründen sind in dieser Ausführungsvarianten lediglich geringe Verschwenkbewegungen der dritten Führungs- und Lagereinrichtung zu erwarten. Jedoch kann die Verschwenkbarkeit auch dazu dienen, Ungenauigkeiten der Führungsflächen, entlang derer die erste und zweite Laufrolle abrollen auszugleichen und damit die auf die Laufrollen wirkenden Spannungen zu reduzieren. Weiter ist vorteilhaft, insbesondere, wenn die dritte Führungs- und Lagereinrichtung baugleich zur ersten und/oder zweiten Führungs- und Lagereinrichtung ausgestaltet ist, dass der Läufer eine hohe Anzahl an Gleichteilen aufweist, wodurch die Herstellkosten gesenkt werden. Durch das Vorsehen einer ersten und zweiten Laufrolle werden außerdem die Traglasten, die vom Läufer erzielbar sind, erhöht. Außerdem weist der Läufer, ähnlich zur oben beschriebenen Ausführungsvariante mit nicht schwenkbarer, mittig angeordneter dritter Führungs- und Lagereinrichtung, einen geringeren Grad an Überbestimmtheit auf, was zu einer vorteilhaften Verteilung der Traglasten im Läufer führt.

Gemäß einer nochmals weiteren vorteilhaften Ausführungsvariante kann dabei vorgesehen sein, dass an der zweiten Seite des Grundkörpers eine vierte Führungs- und Lagereinrichtung angeordnet ist, wobei die vierte Führungs- und Lagereinrichtung um eine vierte Gelenkachse, die zur dritten Gelenkachse zumindest in Transportrichtung parallelverschoben ist, schwenkbar ausgebildet ist und zumindest eine erste und eine zweite drehbare Laufrolle aufweist, deren Rotationsachsen zur vierten Gelenkachse in bezüglich der Transportrichtung entgegengesetzte Richtungen parallelverschoben sind, wodurch die Rotationsachse einer Laufrolle zur Rotationsachse der jeweils anderen Laufrolle in Transportrichtung beabstandet ist. Die vierte Führungs- und Lagereinrichtung weist ferner zumindest eine weitere drehbare Laufrolle auf, deren Rotationsachse vorzugsweise lotrecht zur vierten Gelenkachse ausgerichtet ist, sodass die Rotationsachse um die vierte Gelenkachse schwenkbar ausgebildet ist.

Vorzugsweise ist die Rotationsachse der weiteren Laufrolle der vierten Führungs- und Lagereinrichtung mittig zwischen den Rotationsachsen der ersten Laufrolle und der zweiten Laufrolle angeordnet, d.h. die Rotationsachse der weiteren Laufrolle ist gleich weit von der Rotationsachse der ersten Laufrolle beabstandet wie von der Rotationsachse der zweiten Laufrolle. Weiter bevorzugt schneidet die Rotationsachse der weiteren Laufrolle die Gelenkachse der vierten Führungs- und Lagereinrichtung. Dies bringt die bereits im Zusammenhang mit der ersten, zweiten und dritten Führungs- und Lagereinrichtung beschriebenen Vorteile mit sich.

Somit bilden die dritte und die vierte Führungs- und Lagereinrichtung an der zweiten Seite des Grundkörpers eine ähnliche Anordnung wie die erste und zweite Führungs- und Lagereinrichtung an der ersten Seite des Grundkörpers. Durch das Bereitstellen einer dritten sowie einer vierten Gelenkachse sind sowohl die dritte als auch die vierte Führungs- und Lagereinrichtung um die jeweilige Gelenkachse schwenkbar, sodass eine Ausrichtung der Rotationsachsen der weiteren Laufrollen entsprechend dem Verlauf der durch Führungsschienen einer Transporteinrichtung vorgegebenen Transportstrecke erfolgen kann.

Folglich wird an der zweiten Seite des Grundkörpers eine zur ersten Seite des Grundkörpers ähnliche, verschleißreduzierte Führungsmöglichkeit bereitgestellt, deren Vorteile vor allem in der hohen Anzahl an verwendeten Gleichteilen sowie der hohen erzielbaren Traglasten zu sehen sind.

Bevorzugt aber nicht zwangsläufig kann der Läufer, unabhängig von der konkret gewählten Ausführungsvariante, einen symmetrischen Aufbau bezüglich einer Symmetrieebene, die von der ersten und zweiten Gelenkachse gleich weit beabstandet ist, aufweisen. Die Symmetrieebene ist in diesem Fall lotrecht zur Transportrichtung ausgerichtet, und kann den Grundkörper des Läufers beispielsweise in zwei gleiche Bestandteile unterteilen. Zusätzlich oder alternativ kann der Läufer bezüglich der bereits vorstehend erwähnten Mittelebene symmetrisch ausgebildet sein, wenn die Mittelebene von der ersten und zweiten Seite des Grundkörpers gleich weit beabstandet ist und die Anordnung der Führungs- und Lagereinrichtungen auf der ersten Seite des Grundkörpers mit der Anordnung der Führungs- und Lagereinrichtungen auf der zweiten Seite des Grundkörpers übereinstimmt.

Beispielsweise kann gemäß einer nochmals weiteren vorteilhaften Ausführungsvariante dabei vorgesehen sein, dass die dritte und die vierte Führungs- und Lagereinrichtung, derart zur ersten und zweiten Führungs- und Lagereinrichtung bezüglich der Mittelebene gegenüberliegend angeordnet sind, dass die erste Gelenkachse kollinear zur dritten Gelenkachse angeordnet ist und die zweite Gelenkachse kollinear zur vierten Gelenkachse angeordnet ist.

Somit kann sich ein bezüglich der entsprechend angeordneten Mittelebene symmetrischer Aufbau der Führungs- und Lagereinrichtungen ergeben, der zu einer gleichmäßigen, zuverlässigen Führung des Läufers beiträgt. Der Läufer stellt durch das Vorsehen von zumindest vier schwenkbaren Führungs- und Lagereinrichtungen mit jeweils einer ersten und zweiten Laufrolle, die eine senkrecht zur Mittelebene ausgerichtete Rotationsachse aufweisen, auch beim Transport von großen Lasten, insbesondere von schweren Gegenständen, eine hochpräzise und nahezu toleranzfreie Führung mit hoher Tragfähigkeit bereit. Der Aufbau des Läufers kann jedoch auch asymmetrisch ausgeführt sein.

In ähnlicher Weise kann auch der Aufbau einer Führungs- und Lagereinrichtung symmetrisch oder asymmetrisch ausgeführt sein. Gemäß einer nochmals weiteren vorteilhaften Ausführungsvariante kann dabei vorgesehen sein, dass die Rotationsachsen der Laufrollen zumindest einer verschwenkbaren Führungs- und Lagereinrichtung, insbesondere einer jeden verschwenkbaren Führungs- und Lagereinrichtung, die parallel zur entsprechenden Gelenkachse ausgerichtet sind, gleich weit von der entsprechenden Gelenkachse beabstandet sind. Bevorzugt ist also die Rotationsachse der weiteren Laufrolle mittig zwischen der Rotationsachse der ersten Laufrolle und der Rotationsachse der zweiten Laufrolle angeordnet. Weiter bevorzugt ist auch die Gelenkachse mittig zwischen den Rotationsachsen der ersten und zweiten Laufrolle angeordnet, sodass sich ein symmetrischer Aufbau der Führungs- und Lagereinrichtung ergibt.

Dies trägt weiter dazu bei, die Anzahl der bei der Konstruktion eines Läufers verwendeten Gleichteile zu erhöhen. Außerdem wirken die Lagerkräfte bei dieser Ausführungsvariante an den entsprechend ausgebildeten Führungs- und Lagereinrichtungen mit symmetrischen Hebelarmen, sodass vergleichbare Lagerkräfte an den ersten und zweiten Laufrollen eine in beide Drehrichtungen vergleichbare Drehung der entsprechenden Führungs- und Lagereinrichtungen um die jeweilige Gelenkachse hervorrufen. Folglich weist der Läufer sowohl beim Betrieb in Transportrichtung als auch bei einer Umkehr der Transportrichtung das gleiche Führungsverhalten auf.

Bei einem asymmetrischen Aufbau der Führungs- und Lagereinrichtung können beispielsweise die Rotationsachse der weiteren Laufrolle und/oder die Gelenkachse der Führungs- und Lagereinrichtung außermittig zwischen den Rotationsachsen der ersten und zweiten Rolle angeordnet sein. In vorteilhafter Weise können insbesondere dann, wenn die Rotationsachse der weiteren Laufrolle die Gelenkachse der Führungs- und Lagereinrichtung nicht schneidet, durchgängige Achsen Verwendung finden, sodass eine Führungs- und Lagereinrichtung mit einfachem Aufbau bereitgestellt werden kann, die gleichzeitig zum Bereitstellen von hohen Traglasten geeignet ist.

Obwohl bevorzugt, ist es des Weiteren nicht zwangsweise erforderlich, dass die Rotationsachse der weiteren Laufrolle senkrecht zu den Rotationsachsen der ersten und zweiten Laufrolle ausgerichtet. Durch einen von 90° verschiedenen Anstellwinkel der Achsen zueinander kann so beispielsweise eine angestellte Lagerung bereitgestellt werden.

Gemäß einer nochmals weiteren vorteilhaften Ausführungsvariante kann dabei vorgesehen sein, dass die Laufrollen identisch zueinander ausgebildete Außendurchmesser aufweisen, insbesondere identisch ausgestaltet sind. Diese Ausgestaltung der Laufrollen trägt dazu bei, die Anzahl an Gleichteilen zu erhöhen sowie die auf die Laufrollen wirkenden Lagerkräfte auch bei einer Umkehr der Transportrichtung in einem vergleichbaren Maß zu halten. Jedoch können je nach Anwendungsfall auch verschiedene Rollendurchmesser für die ersten, zweiten und/oder weiteren Laufrollen vorgesehen sein.

Gemäß einer nochmals weiteren vorteilhaften Ausführungsvariante kann dabei vorgesehen sein, dass zumindest eine verschwenkbare Führungs- und Lagereinrichtung, insbesondere eine jede verschwenkbare Führungs- und Lagereinrichtung, jeweils mittels Gleitlager oder Rollenlager drehbar um die entsprechende Gelenkachse gelagert ist. Dies bringt den Vorteil mit sich, dass das Verschwenken der Führungs- und Lagereinrichtungen besonderes leichtgängig erfolgen kann. Somit kann eine genaue Anpassung der Ausrichtung der Rotationsachsen der weiteren Laufrollen bezüglich des Verlaufs der Transportstrecke, insbesondere in nicht-linearen Abschnitten der Transportstrecke, erfolgen. So wird der Verschleiß der Laufrollen beim Betrieb eines Läufers reduziert, wobei gleichzeitig die erzielbaren Traglasten und die Genauigkeit der Führung verbessert werden.

Gemäß einer nochmals weiteren vorteilhaften Ausführungsvariante kann dabei vorgesehen sein, dass zumindest eine Laufrolle, insbesondere eine jede Laufrolle, mittels Gleitlager oder Rollenlager drehbar um die entsprechende Rotationsachse gelagert sind. Dies bringt den Vorteil mit sich, dass die Laufrollen besonderes leichtgängig sind und somit die Führung der Laufrollen sehr genau ausgestaltet sein kann. So wird der Verschleiß der Laufrollen beim Betrieb eines Läufers reduziert, wobei gleichzeitig die erzielbaren Traglasten verbessert werden.

Gemäß einer nochmals weiteren vorteilhaften Ausführungsvariante kann dabei vorgesehen sein, dass zumindest eine Führungs- und Lagereinrichtung in Richtung der jeweiligen Gelenkachse beweglich am Grundkörper angeordnet ist. Die Führungs- und Lagereinrichtung kann eine Vorspanneinrichtung aufweisen, mittels derer die Führungs- und Lagereinrichtung mit einer Vorspannkraft in Richtung der jeweiligen Gelenkachse beaufschlagbar ist.

Beispielsweise kann zwischen dem Grundkörper des Läufers und der daran in Richtung der Gelenkachse beweglich angeordneten Führungs- und Lagereinrichtung eine Feder, insbesondere eine Druckfeder, vorgesehen sein, die in Richtung der Gelenkachse elastisch komprimierbar ist, wenn die Führungs- und Lagereinrichtung in Richtung des Grundkörpers verschoben wird. So kann, wenn die dritten Laufrollen der Führungs- und Lagereinrichtung in Anlage mit einer Führungsfläche einer Führungsschiene gebracht werden, durch die Feder eine elastische Vorspannkraft hervorgerufen werden, die vom Grundkörper weg in Richtung der Führungsfläche wirkt und die Laufrollen der Führungs- und Lagereinrichtung gegen die Führungsfläche drückt.

Der Läufer kann auf der ersten Seite des Grundkörpers und/oder auf der zweiten Seite des Grundköpers beweglich angeordnete Führungs- und Lagereinrichtungen sowie eine zugehörige Vorspanneinrichtung aufweisen. Insbesondere, wenn der Läufer vertikal stehend angeordnet ist, d.h. wenn die erste Seite des Grundkörpers oberhalb der zweiten Seite angeordnet ist oder umgekehrt, kann es bevorzugt sein, die Führungs- und Lagereinrichtungen an der untenliegenden Seite entlang der jeweiligen Gelenkachse unbeweglich auszugestalten, um eine stabile und kinematisch bestimmte Auflage für den Grundkörper des Läufers bereitzustellen. Zusätzlich oder alternativ kann es bevorzugt sein die obenliegenden Führungs- und Lagereinrichtungen mittels einer vorher beschriebenen Vorspanneinrichtung gegen eine Führungsfläche einer Führungsschiene vorzuspannen, um eine zuverlässige Anlage der Laufrollen der Führungs- und Lagereinrichtungen an der Führungsfläche zu gewährleisten.

Gemäß einer nochmals weiteren vorteilhaften Ausführungsvariante kann dabei vorgesehen sein, dass die erste, zweite, dritte, und/oder vierte Führungs- und Lagereinrichtung an jeder Rotationsachse, die parallel zu einer Gelenkachse ausgerichtet ist, jeweils eine zusätzliche Laufrolle mit paralleler Rotationsachse umfassen.

Wie nachstehend im Zusammenspiel mit den Führungsschienen eines Transportsystems beschrieben ist, kann durch das Vorsehen zusätzlicher Laufrollen eine Verspannung der Laufrollen an durch die Führungsschienen bereitgestellten Führungsflächen erfolgen. Folglich wird durch ebendieses System die Genauigkeit der Führung des Läufers verbessert, auch beim Transport von schweren Lasten.

Die Aufgabe wird außerdem durch ein Transportsystem zur Beförderung von Gegenständen entlang einer Transportstrecke gelöst, das wenigstens eine ortsfeste Laufschiene und zumindest einen entlang der Laufschiene bewegbaren Läufer nach einer der vorstehend ausgeführten Ausführungsvarianten umfasst.

Das Transportsystem und/oder der Läufer sind insbesondere zur getakteten Beförderung von Gegenständen geeignet, wobei auch eine kontinuierliche Beförderung von Gegenständen mit dem Transportsystem bzw. dem Läufer realisierbar ist. Unter "getaktet" wird im Rahmen der vorliegenden Erfindung eine intermittierende Bewegung verstanden, die sich im Gegensatz zu einer kontinuierlichen Bewegung durch schrittweise oder periodisch wiederkehrende Bewegungsabläufe auszeichnet, und zwar mit einem Stillstand nach oder vor jedem Bewegungsschritt. Ein intermittierend bewegtes Element, das beispielsweise ein um definierte Wegstrecke bewegter Läufer sein kann, vollzieht hierbei ein Bewegungsprofil, bei dem der Läufer periodisch nahezu stoß- und/oder ruckfrei auf eine gewisse Geschwindigkeit beschleunigt und anschließend wieder abgebremst wird.

An der ortsfesten Laufschiene ist eine Vielzahl von ortsfesten Spulenelementen vorgesehen, die mit dem zumindest einen Permanentmagneten des Läufers einen elektromagnetischen Antrieb zum Antreiben des zumindest einen Läufers mittels elektromagnetischer Kräfte ausbilden.

Die Laufschiene weist zumindest abschnittsweise entlang der Transportstrecke eine erste Führungsschiene sowie eine der ersten Führungsschiene bezüglich der Mittelebene des Läufers gegenüberliegende, zweite Führungsschiene auf. Dementsprechend dient die erste Führungsschiene des Transportsystems der Führung der Laufrollen der Führungs- und Lagereinrichtungen, die an der ersten Seite des Grundkörpers des Läufers angeordnet sind. Die zweite Führungsschiene des Transportsystems dient folglich der Führung Laufrollen der an der gegenüberliegenden zweiten Seite des Grundkörpers des Läufers angeordneten Führungs- und Lagereinrichtung(en).

Die zumindest eine erste und zumindest eine zweite drehbare Laufrolle der ersten und zweiten Führungs- und Lagereinrichtung des zumindest einen Läufers sind von einer parallel zur ersten und zweiten Gelenkachse ausgerichteten ersten Führungsfläche der ersten Führungsschiene des Transportsystems geführt. Die zumindest eine weitere drehbare Laufrolle der ersten und zweiten Führungs- und Lagereinrichtung ist von einer zur ersten Führungsfläche vorzugsweise lotrechten zweiten Führungsfläche der ersten Führungsschiene des Transportsystems geführt.

Die zumindest eine erste drehbare Laufrolle der dritten Führungs- und Lagereinrichtung des zumindest einen Läufers ist von einer parallel zur ersten und zweiten Gelenkachse ausgerichteten ersten Führungsfläche der zweiten Führungsschiene des Transportsystems geführt und die zumindest eine weitere drehbare Laufrolle der dritten Führungs- und Lagereinrichtung ist von einer zur ersten Führungsfläche vorzugsweise lotrechten zweiten Führungsfläche der zweiten Führungsschiene der Transportsystems geführt.

Durch das Zusammenwirken der ersten Führungsfläche und der zweiten Führungsfläche der ersten Führungsschiene sowie der ersten Führungsfläche und der zweiten Führungsfläche der zweiten Führungsschiene wird der Läufer derart geführt, dass der Läufer lediglich in Transportrichtung bewegbar ist. Eine Bewegung gemäß einem anderen Freiheitsgrad ist durch die erste und zweite Führungsschiene des Transportsystems unterbunden. Folglich kann der Läufer bei einer Bewegung entlang eines Geradenabschnittes der Transportstrecke eine translatorische Bewegung ausführen. Bei einer Bewegung entlang eines Bogenabschnittes der Transportstrecke kann der Läufer eine Rotationsbewegung um den Mittelpunkt des Bogenabschnittes ausführen.

Unabhängig von der konkreten Ausgestaltung der Führungsschienen können die erste und die zweite Führungsschiene in einer bevorzugten Ausführungsform baugleich ausgeführt sein. Beispielsweise können die erste und die zweite Führungsschiene bezüglich der Mittelebene des Läufers symmetrisch ausgeführt sein, insbesondere dann, wenn auch der Läufer bezüglich der Mittelebene symmetrisch ausgeführt ist. Alternativ können die erste und die zweite Führungsschiene auch unterschiedlich ausgebildet sein, insbesondere in den gekrümmten Bogenabschnitten der Transportstrecke, was bevorzugt sein kann, wenn der Läufer bezüglich der Mittelebene nicht symmetrisch aufgebaut ist, beispielsweise weil an der ersten Seite des Grundkörpers eine erste und eine zweite Führungs- und Lagereinrichtung vorgesehen sind, an der gegenüberliegenden zweiten Seite des Grundkörpers aber nur eine dritte Führungs- und Lagereinrichtung vorgesehen ist. Die erste und die zweite Führungsschiene können außerdem an einem einzigen, gemeinsamen Element bereitgestellt sein oder aus einer Mehrzahl von Elementen aufgebaut sein. Insbesondere kann es bevorzugt sein, die erste Führungsfläche und die zweite Führungsfläche einer Führungsschiene an demselben Element bereitzustellen. Alternativ können die erste Führungsfläche und die zweite Führungsfläche an verschiedenen Elementen bereitgestellt werden, die in ihrer Gesamtheit die erste und/oder zweite Führungsschiene bilden.

In einer vorteilhaften Ausführungsvariante ist die für die Laufrollen bereitgestellte Führungsfläche, insbesondere die erste und/oder zweite Führungsfläche, entlang des Bogenabschnittes krümmungsstetig ausgebildet. In diesem Fall erfolgt eine besonders genaue Ausrichtung der Rotationsachsen der weiteren Laufrollen zum Krümmungsmittelpunkt hin, sodass eine besonders verschleißarme Führung des Läufers ermöglicht wird.

Gemäß einer vorteilhaften Ausführungsvariante kann dabei vorgesehen sein, dass die zumindest eine zweite drehbare Laufrolle der dritten Führungs- und Lagereinrichtung des Läufers von der ersten Führungsfläche der zweiten Führungsschiene des Transportsystems geführt ist.

Gemäß einer weiteren vorteilhaften Ausführungsvariante kann dabei vorgesehen sein, dass die zumindest eine erste und zweite drehbare Laufrolle der vierten Führungs- und Lagereinrichtung des Läufers von der ersten Führungsfläche der zweiten Führungsschiene des Transportsystems geführt sind und die zumindest eine weitere drehbare Laufrolle der vierten Führungs- und Lagereinrichtung von der zweiten Führungsfläche der zweiten Führungsschiene des Transportsystems geführt ist.

Gemäß einer nochmals weiteren vorteilhaften Ausführungsvariante kann dabei vorgesehen sein, dass mehrere unabhängig und autonom zueinander entlang der Transportstrecke bewegbare Läufer vorgesehen sind, wobei der elektromagnetische Antrieb als Linearantrieb, vorzugsweise als Langstator-Linearantrieb ausgebildet ist.

Gemäß einer weiteren vorteilhaften Ausführungsvariante kann dabei vorgesehen sein, dass das Transportsystem zumindest einen Läufer mit zusätzlichen Laufrollen aufweist. In diesem Fall können die ersten, zweiten und jeweils zusätzlichen Laufrollen, deren Rotationsachse parallel zu den vorhandenen Gelenkachsen ausgerichtet ist, zwischen der ersten Führungsfläche und einer der ersten Führungsfläche gegenüberliegenden und parallel zu den Gelenkachsen verlaufenden dritten Führungsfläche der jeweiligen Führungsschiene geführt sein.

Die jeweils eine erste bzw. zweite Laufrolle kann an der ersten Führungsfläche anliegen und die jeweils zusätzliche Laufrolle kann an der dritten Führungsfläche anliegen, wobei die erste bzw. zweite Laufrolle und die jeweils zusätzliche Laufrolle zueinander vorgespannt geführt sind. Die Abschnitte der ersten und der dritten Führungsfläche, in denen die Laufrollen anliegen, sind entlang der vorhandenen Gelenkachsen zueinander versetzt und einander gegenüberliegend.

Es kann dabei vorgesehen sein, dass die jeweilige erste bzw. zweite Laufrolle und die entsprechende zusätzliche Laufrolle um dieselbe Rotationsachse drehbar sind und unmittelbar oder mittelbar benachbart an dieser im Bereich eines jeweiligen freien Endes der Rotationsachse vorgesehen sind.

Alternativ kann jedoch auch vorgesehen sein, dass die erste und/oder zweite Rotationsachse des Läufers an dem freien Ende jeweils einen ersten und zweiten Rotationsachsenabschnitt aufweist, wobei der erste Rotationsachsenabschnitt eine erste Teilrotationsache für die jeweils erste bzw. zweite Laufrolle und der jeweils zweite Rotationsachsenabschnitt eine zweite Teilrotationsachse für die jeweils zusätzliche Laufrolle ausbildet, und wobei die jeweils erste Teilrotationsachse versetzt, insbesondere parallel versetzt, zu der jeweils zweiten Teilrotationsachse verläuft.

Gemäß einer nochmals weiteren vorteilhaften Ausführungsvariante kann dabei vorgesehen sein, dass die erste und/oder die zweite Rotationsachse im Bereich der jeweiligen Gelenkachsenabschnitte als Exzenterachse ausgebildet ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:
- Fig. 1: in vereinfachter perspektivischer Darstellung eine beispielhafte Aus-führungsvariante eines Transportsystems;
- Fig. 2: eine Schnittdarstellung der Ausführungsvariante des Transportsys-tems gemäß Figur 1 entlang der in Figur 1 markierten Schnittebene II-II;
- Fig. 3: ein Prinzipskizze einer Ausführungsvariante eines Läufer gemäß dem Stand der Technik;
- Fig. 4: eine Prinzipskizze einer Ausführungsvariante eines Läufers;
- Fig. 5: in schematischer, perspektivischer Darstellung eine erste Ausführungsform eines Läufers;
- Fig. 6: in schematischer, perspektivischer Darstellung eine zweite Ausführungsform eines Läufers;
- Fig. 7: in schematischer, perspektivischer Darstellung eine dritte Ausführungsform eines Läufers;
- Fig. 8: in schematischer, perspektivischer Darstellung eine vierte Ausführungsform eines Läufers;
- Fig. 9: in schematischer Darstellung eine Ausführungsform eines Läufers aus der Draufsicht; und
- Fig. 10: eine Schnittdarstellung der Ausführungsvariante des Läufers gemäß Figur 9 entlang der in Figur 9 markierten Schnittebene X-X.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

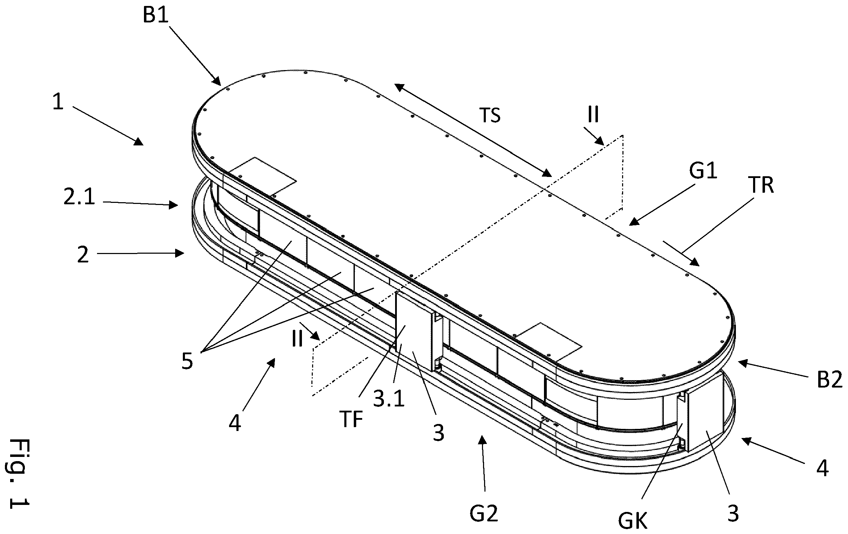

In den Figuren ist mit 1 ein Transportsystem zur Beförderung von Gegenständen entlang einer Transportstrecke TS in zumindest einer Transportrichtung TR (in Figur 1 beispielhaft dargestellt) bezeichnet. Das Transportsystem 1 umfasst hierbei eine ortsfeste Laufschiene 2 sowie zumindest einen Läufer 3 zum Befördern der Gegenstände entlang der Transportstrecke TS.

Ferner umfasst das Transportsystem 1 einen elektromagnetischen Antrieb 4 zum Antreiben des zumindest einen Läufers 3 mittels elektromagnetischer Kräfte. Dabei kann der elektromagnetische Antrieb 4 des Transportsystems 1 auch zumindest ein, vorzugsweise jedoch mehrere identisch zueinander ausgebildete Antriebsmodule 5 aufweisen, die entlang der Transportstrecke TS modulartig benachbart vorgesehen sein können und dabei je Antriebsmodul 5 aneinander angeordnet sein können.

In einer bevorzugten Ausführungsvariante ist auch die zur Führung des Läufers 3 vorgesehene Laufschiene 2 modulartig ausgebildet und umfasst dabei mehrere Laufschienenmodule 2.1 die nach dem Prinzip eines Baukastens miteinander verbunden sein können.

Hierbei kann vorgesehen sein, dass einem jeden Laufschienenmodul 2.1 ein separates Antriebsmodul 5 zugeordnet ist. In anderen Worten kann einem Laufschienenmodul 2.1 damit ein eigenes Antriebsmodul 5 zugeordnet sein, das nach dem Prinzip eines Schienenstecksystems zusammengebaut werden kann. Damit ist das bzw. die Antriebsmodule 5 als Teil bzw. Bestandteil der Laufschiene 2 vorgesehen.

Das Transportsystem 1 kann mehrere Läufer 3 aufweisen, die zueinander identisch ausgebildet sein können, wobei die mehreren Läufer 3 beabstandet an der Laufschiene 2 vorgesehen sein können. Jeder Läufer 3 kann unabhängig von den weiteren vorgesehenen Läufern 3 bewegt werden, und zwar vorzugsweise jeweils autonom.

In der Ausführungsvariante der Figur 1 weist die Laufschiene 2 einen ersten Bogenabschnitt B1, einen zweiten Bogenabschnitt B2 sowie einen ersten Geradenabschnitt G1 und einen zweiten Geradenabschnitt G2 auf. Die beiden Geradenabschnitte G1, G2 sind zwischen dem ersten und zweiten Bogenabschnitt B1, B2 vorgesehen und verbinden dabei die jeweiligen freien Enden der beiden Bogenabschnitte B1, B2 derart miteinander, dass die Laufschiene 2 eine im Wesentlichen ovale, geschlossen umlaufende Schleife für die Läufer 3 ausbildet. Jedoch ist es auch möglich, eine andere Laufbahnform der Laufschiene 2, z. B. eine winkelförmige Laufbahnform mittels der einzelnen modulartig ausgebauten Schienenmodule zusammenzusetzen. Die Transportstrecke TS erstreckt sich dabei zumindest entlang der Geradenabschnitte G1, G2 und umfasst vorteilhaft jedoch auch zusätzlich die beiden Bogenabschnitte B1, B2.

Vorteilhaft weist damit die Laufschiene 2 unterschiedliche Laufschienenmodule 2.1 auf, und zwar Laufschienenmodule 2.1, welche die Bogenabschnitte B1, B2 ausbilden und Laufschienenmodule 2.1 für die Geradenabschnitte G1, G2.

Der elektromagnetische Antrieb 4 umfasst dabei einen Linearmotor 6 mit einem Stator 7, zumindest einem Permanentmagneten 8 und eine nicht weitergehend gezeigte zentrale Steuereinrichtung. Der Stator 7 kann dabei von einer Vielzahl von getrennt zueinander und beabstandet an der Laufschiene 2 vorgesehenen und bestrombar ausgebildeten Spulenelementen 9 gebildet sein, während der zumindest eine Permanentmagnet 8 an dem zumindest einem Läufer 3 angeordnet ist, insbesondere am Grundkörper GK des Läufers angeordnet sein kann. Gemäß einer Ausführungsvariante sind die bestrombaren Spulenelemente 9 in dem jeweiligen Antriebsmodul 5 nebeneinander angeordnet. Ein jedes Antriebsmodul 5 ist mit der Laufschiene 2 verbunden bzw. als Teil oder Bestandteil der Laufschiene 2 ausgebildet.

Dabei sind die bestrombaren Spulenelemente 9 in einer Reihe parallel verlaufend zu der Laufschiene 2 angeordnet. Mehr im Detail kann der zumindest eine Permanentmagnet 8 derart an dem zumindest einen Läufer 3 vorgesehen sein, dass dieser seitlich des Stators 7 angeordnet ist. In anderen Worten weist also der elektromagnetische Antrieb 4 eine Vielzahl von ortsfesten Spulenelementen 9, die den Stator 7 bilden, und zumindest einen Permanentmagnet 8 auf, wobei die ortsfesten Spulenelemente 9 an der ortsfesten Laufschiene 2 und der zumindest eine Permanentmagnet 8 an dem zumindest einem Läufer 3 angeordnet sind.

Die Steuereinrichtung ist dabei mit dem Stator 7 elektrisch verbunden und dazu ausgebildet, einen Spulenstrom durch eine vordefinierte Anzahl von Spulenelementen 9, also einen Stromfluss durch die vordefinierte Anzahl von Spulenelementen 9, zu variieren. Der Spulenstrom erzeugt ein magnetisches Wechselfeld, das mit dem zumindest einen Permanentmagneten 8 wechselwirkt. Die Steuereinrichtung ist dabei dazu ausgebildet, die Bewegung des zumindest einen Läufers 3 entlang der Transportstrecke TS zu steuern und/oder zu regeln und zwar für jeden Läufer 3 separat und unabhängig zu den weiteren Läufern 3.

Der elektromagnetische Antrieb 4 ist damit als Linearantrieb ausbildet, mehr im Detail als Langstator-Linearantrieb.

Mehr im Detail steuert und/oder regelt die Steuereinrichtung die Spulenströme durch die Spulenelemente 9 derart, dass über die Wechselwirkung der Permanentmagnete 8 mit dem durch die Spulenelemente 9 erzeugten magnetischen Wanderfeld eine entlang bzw. längs des Antriebsmoduls 5 gerichtete Kraft auf den zumindest einen Läufer 3 ausgeübt wird.

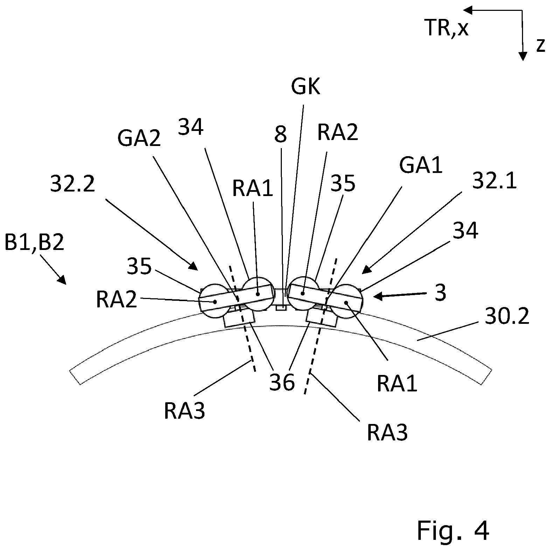

Die jeweiligen Läufer 3 können beispielsweise einen Grundkörper GK, der eine Oberseite 3.1 und eine Unterseite 3.2 aufweist, umfassen, wie sich insbesondere aus den Figuren 4 bis 10 ergibt. An der Unterseite 3.2 des Grundkörpers GK des Läufers 3 können die Permanentmagnete 8 derart gehaltert sein, dass die Permanentmagnete 8 einen geringen Abstand im Bereich von 1mm bis 10mm zu Spulenelementen 9, also dem Stator 7 des Linearantriebs 6, aufweisen, um einen Berührungskontakt einerseits zwischen dem Läufer 3 und den Spulenelementen 9 zu vermeiden und andererseits einen Spalt für den magnetischen Fluss zwischen dem permanenten Magnetfeld und dem Wanderfeld gering zu halten. Für die korrekte Funktionsweise eines Transportsystems 1 ist es essentiell, dass der Luftspalt sowohl in Geradenabschnitten G1, G2 als auch in Bogenabschnitten B1, B2 der Transportstrecke TS ein vordefiniertes Maß aufweist.

Zusätzlich kann am Läufer 3 ein Signalgeber für eine Positionsermittlungseinrichtung des Läufers 3 zur Ermittlung der Position entlang der Transportstrecke TS angeordnet sein. Die ermittelte Position des Läufers 3 kann an eine Steuereinrichtung übermittelt werden, sodass eine Steuerung bzw. Regelung der Position des Läufers 3 erfolgen kann.

Beispielsweise kann an der jeweiligen Oberseite 3.1 des Grundkörpers GK des Läufers 3 eine Transport- oder Haltefläche TF ausgebildet sein, an der vorzugsweise jeweils eine Aufnahme, nicht gezeigt in den Figuren, vorgesehen sein kann, die für die Aufnahme von Gegenständen (z.B. Werkstücke oder andere Produkte) vorgesehen ist, die mit dem umlaufenden Läufern 3 in und/oder entgegen der Transportrichtung TR entlang der Transportstrecke TS bewegt werden können.

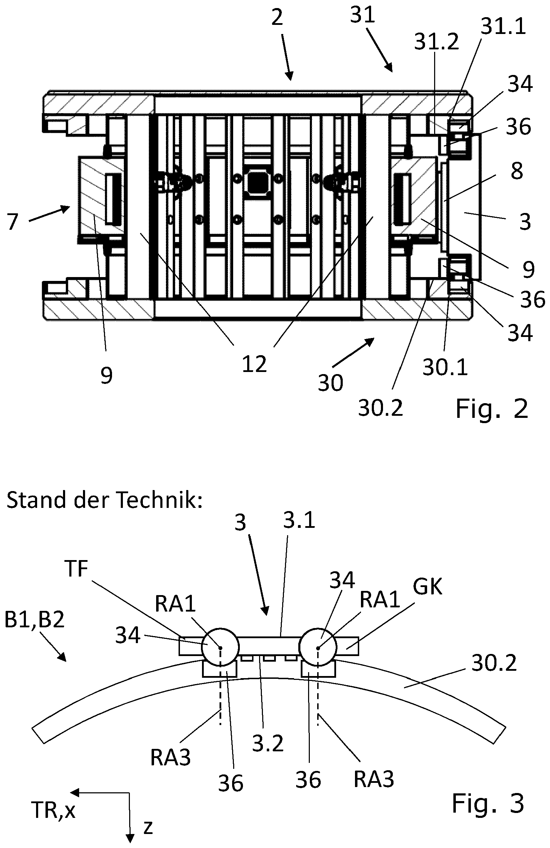

Figur 2 stellt eine Schnittansicht entlang der in Figur 1 mit II-II markierten Schnittebene des in Figur 1 dargestellten Transportsystems 1 dar. Zum Ausbilden eines Transportsystems 1 ist der Läufer 3 in einer Laufschiene 2, wie beispielsweise in Figur 2 dargestellt, geführt, welche zumindest abschnittsweise entlang der Transportstrecke TS eine erste und zweite Führungsschiene 30, 31 aufweist, die sich im Wesentlichen in Transportrichtung TR erstrecken können. Hierfür weist der zumindest eine Läufer 3 Laufrollen 34, 35, 36 auf, die jeweils beidseitig mit ersten Führungsflächen 30.1, 31.1 und zweiten Führungsflächen 30.2, 31.2 der ersten und zweiten Führungsschiene 30, 31 in Wirkverbindung bringbar sind.

Die Laufschiene 2 weist einen als Laufschienengestell ausgebildeten Laufschienenkörper 12 zur Aufnahme bzw. Anordnung des Antriebsmoduls 5 des elektromagnetischen Antriebs 4 sowie der ersten und zweiten Führungsschiene 30, 31 auf. Die erste und zweite Führungsschiene 30, 31 ist üblicherweise entlang der Transportstrecke TS zumindest entlang der Geradenabschnitte G1, G2, jedoch häufig auch zusätzlich entlang der beiden Bogenabschnitte B1, B2 eines als Bogenabschnitt ausgebildeten Laufschienenmoduls 2.1 vorgesehen. Zu Führung der Laufrollen 34, 35, 36 der Läufer 3 sind an der ersten und der zweiten Führungsschiene 30, 31 Führungsflächen 30.1, 30.2 bzw. 31.1 und 31.2 bereitgestellt, mit denen die Laufrollen 34, 35, 36 und ebenso etwaig vorgesehene zusätzliche Laufrollen 37 in Wirkverbindung stehen, insbesondere in Wälzkontakt stehen.

Insbesondere können die Führungsschienen 30, 31 einteilig mit dem Laufschienenkörper 12 ausgeführt sein oder alternativ fest, jedoch lösbar, mit dem Laufschienenkörper 12 verbunden, insbesondere verschraubt, sein.

Die ersten Führungsflächen 30.1 und 31.1 der ersten bzw. zweiten Führungsschiene 30, 31 stellen eine Führung für den Läufer 3 zur Abstützung der magnetischen Kräfte bereit, wobei der Läufer während seiner Bewegung kontaktschlüssig entlang der Transportstrecke TS mit seinen Laufrollen 34, 35 an den ersten Führungsflächen 30.1 und 31.1 entlang rollt bzw. sich die Laufrollen 34, 35 an diesen abwälzen. In anderen Worten sind also, wenn das Transportsystem 1 mit der entsprechenden, in Figur 1 dargestellten Orientierung installiert ist, zur horizontalen Führung des Läufers 3 die ersten Führungsflächen 30.1, 31.1 vorgesehen.

Dabei bilden die zweiten Führungsflächen 30.2 und 31.2 der ersten bzw. zweiten Führungsschiene 30, 31 insbesondere eine seitliche Führung für den Läufer 3 aus. Die Laufrollen 36 des Läufers 3 rollen während der Bewegung des Läufers 3 beidseitig sowie kontaktschlüssig entlang der Transportstrecke TS an den zweiten Führungsflächen 30.2 und 31.2 entlang bzw. wälzen sich an diesen ab. In anderen Worten sind also, wenn das Transportsystem 1 mit der entsprechenden, in Figur 1 dargestellten Orientierung installiert ist, zur vertikalen Führung des Läufers 3 die zweiten Führungsflächen 30.2, 31.2 vorgesehen.

Gemäß der Ausführungsformen des Standes der Technik kommen in derartigen Transportsystemen 1 verschiedenartige Läufer 3 zum Einsatz. Zum Vergleich und zur besseren Erläuterung des Funktionsprinzips der Erfindung ist in Figur 3 eine schematische Darstellung in Form einer Prinzipskizze eines Läufers nach dem Stand der Technik dargestellt.

Der Läufer 3 weist einen Grundkörper GK auf, an dessen Oberseite 3.1 eine Transport- oder Haltefläche TF ausgebildet ist. Zudem weist der Läufer 3 in Transportrichtung TR gesehen jeweils zueinander beabstandete Laufrollen 34 mit einer ersten Rotationsachse RA1 auf, die unmittelbar am Grundkörper GK angeordnet sind. Die jeweiligen Rotationsachsen RA1 verlaufen dabei in ihrer jeweiligen Längserstreckung lotrecht zur Längserstreckung der Transportrichtung TR. Zudem verläuft die Längserstreckung der ersten Rotationsachse RA1 der ersten Führungs- und Lagereinrichtung 32.1 parallel zu der Längserstreckung der ersten Rotationsachse RA1 der zweiten Führungs- und Lagereinrichtung 32.2.

Der Läufer 3 ist dabei mittels drehbaren Laufrollen 34 beidseitig in der ersten Führungsschiene 30 und in der zweiten Führungsschiene 31, die der ersten Führungsschiene 30 bezüglich der Transportrichtung gegenüberliegt, geführt. In Figur 3 sind aus Gründen der Übersichtlichkeit weder die erste noch die zweite Führungsschiene 30, 31 dargestellt.

Der Läufer 3 weist ferner Laufrollen 36 auf, die unmittelbar an einer Unterseite 3.2 des Grundkörpers GK angeordnet sind. Die Laufrollen 36 sind um eine Rotationsachse RA3 drehbar am Grundkörper GK festgelegt, die senkrecht zur Transportrichtung TR und zur Rotationsachse RA1 orientiert ist. Folglich ist die Rotationsachse RA3 der Laufrollen 36 parallel zu einer Koordinatenachse z.

Die Laufrollen 36 sind an zweiten Führungsflächen 30.2, 31.2 der Führungsschienen 30, 31, die beispielsweise in Form der in Figur 2 dargestellten Führungsschienen 30, 31 ausgebildet sein können, geführt. In einem Bogenabschnitt B1, B2 der Transportstrecke TR beschreiben die zweiten Führungsflächen 30.2, 31.2 einen Teilkreis um eine Mittelachse, die parallel zur Rotationsachse RA1 ausgerichtet ist.

Problematisch an den Läufern 3 des Standes der Technik sind, wie eingangs erläutert, sowohl eine vergleichsweise niedrige Tragfähigkeit als auch ein hoher Rollenverschleiß. Durch aufwendige Versuche konnte von den Erfindern ermittelt werden, dass das Problem eines erhöhten Verschleißes der Rollen besonders durch die Führung des Läufers in den Bogenabschnitten B1, B2 der Transportstrecke TS hervorgerufen wird. Werden Gegenstände mittels des Läufers 3 entlang der Transportstrecke TS befördert, so bewegt sich jeder Massepunkt des Läufers 3 aufgrund der Führung des Läufers 3 durch die Rollen 34 in der Führungsschienen 30, 31 tangential zur von den Führungsschienen 30, 31 vorgegebenen Kreisbahn. Durch den nicht-infinitesimalen Abstand der Rotationsachsen RA1 der Laufrollen 34 zueinander ergibt sich auch zwischen den zu diesen senkrechten Rotationsachsen RA3 der Laufrollen 36 ein nicht zu vernachlässigender Abstand. Wenn der Läufer 3 entlang eines Bogenabschnittes B1, B2 einer Transportstrecke TS bewegt wird, weisen die ersten und zweiten Lagerpunkte des Läufers 3, an denen jeweils die Laufrollen 34 und 36 angeordnet sind, aufgrund dieses Abstandes voneinander verschiedene Bewegungsvektoren auf.

Die jeweils tangential zur von den Führungsschienen 30, 31 vorgegebenen Kreisbahn ausgerichteten Bewegungsvektoren der ersten und zweiten Lagerpunkte des Läufers 3 stimmen nicht mit der Abrollrichtung der Laufrollen 36 um die Rotationsachse RA3 überein. Folglich führen die Laufrollen 36 keine reine Wälz- bzw. Rollbewegung aus, sondern gleiten bzw. rutschen zusätzlich über die zweite Führungsfläche 30.2, 31.2, um den Versatz zwischen Abrollrichtung und Ausrichtung des Bewegungsvektors auszugleichen. Dies führt zu einem erhöhten Abrieb und damit Verschleiß der Laufrollen 36, und beeinträchtigt die Funktionalität eines Transportsystems 1 negativ.

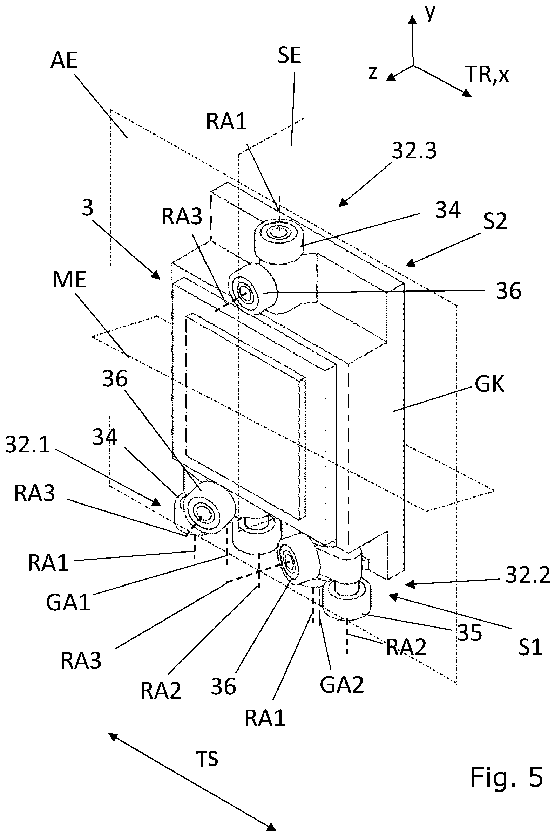

In Figur 4 ist eine Prinzipskizze eines Läufers 3 dargestellt, der einen geringen Rollenverschleiß bewirkt. Der Läufer 3 ist für die Anwendung in einem Transportsystem 1 zur Beförderung von Gegenständen entlang einer Transportstrecke TS in zumindest einer Transportrichtung TR vorgesehen. Der Läufer 3 weist zumindest einen Permanentmagneten 8 auf, der in der dargestellten Ausführungsvariante unmittelbar an der Unterseite 3.2 eines Grundkörpers GK angeordnet ist. Der Grundkörper GK weist, wie detaillierter aus den Figuren 5 bis 10 hervorgeht, eine erste Seite S1 und eine der ersten Seite S1 bezüglich einer die zumindest eine Transportrichtung TR beinhaltenden Mittelebene ME gegenüberliegende zweite Seite S2 auf.

Figur 4 stellt eine Draufsicht auf die erste Seite S1 des Grundkörpers GK dar, wobei an der ersten Seite S1 des Grundkörpers GK zumindest eine erste Führungs- und Lagereinrichtung 32.1 und eine zweite Führungs- und Lagereinrichtung 32.2 angeordnet sind.

Die zweite Führungs- und Lagereinrichtung 32.2 ist von der ersten Führungs- und Lagereinrichtung 32.1 in Transportrichtung TR beabstandet, sodass sich für den Läufer 3 zumindest zwei voneinander in Transportrichtung beabstandete Lagerpunkte ergeben. An der in Figur 4 nicht dargestellten zweiten Seite S2 des Grundkörpers GK ist zumindest eine dritte Führungs- und Lagereinrichtung 32.3 angeordnet.

Die erste und die zweite Führungs- und Lagereinrichtung 32.1, 32.2 bilden bevorzugt jeweils eigenständige Baueinheiten, die am Grundkörper GK vorgesehen sind. Die erste und die zweite Führungs- und Lagereinrichtung 32.1, 32.2 sind dabei insbesondere um eine jeweilige erste bzw. zweite Gelenkachse GA1, GA2, die lotrecht zur Mittelebene ME ausgerichtet ist, schwenkbar ausgebildet und/oder schwenkbar am Grundkörper GK angeordnet.

Sowohl die erste als auch die zweite Führungs- und Lagereinrichtung 32.1, 32.2 weisen zumindest eine erste und eine zweite drehbare Laufrolle 34, 35 auf, deren Rotationsachsen RA1, RA2 zur jeweiligen Gelenkachse GA1, GA2 in bezüglich der Transportrichtung TR entgegengesetzte Richtungen parallelverschoben sind. Das heißt, die Rotationsachse RA1 der ersten Laufrolle 34 ist im Vergleich zur Rotationsachse RA2 der zweiten Laufrolle 35 bezüglich der Gelenkachse GA1 bzw. GA2 gegenüberliegend, d.h. auf der anderen Seite der Gelenkachse GA1 bzw. GA2 angeordnet. Dementsprechend ist die Rotationsachse RA1, RA2 einer Laufrolle 34, 35 zur Rotationsachse RA2, RA1 der jeweils anderen Laufrolle 35, 34 in Transportrichtung TR beabstandet.

Die erste und die zweite Führungs- und Lagereinrichtung 32.1, 32.2 weisen zumindest eine weitere drehbare Laufrolle 36 auf, deren Rotationsachse RA3 vorzugsweise lotrecht zur jeweiligen Gelenkachse GA1, GA2 ausgerichtet ist und vorzugsweise die jeweilige Gelenkachse GA1, GA2 derart schneidet, sodass die Rotationsachse RA3 der weiteren Laufrolle 36 um die jeweilige Gelenkachse GA1, GA2 schwenkbar ausgebildet ist. Bevorzugt ist die Rotationsachse RA3 von den Rotationsachsen RA1 und RA2 äquidistant beabstandet.

Wie aus den Figuren 5 bis 10 ersichtlich ist, kann die dritte Führungs- und Lagereinrichtung 32.3 zumindest eine erste drehbare Laufrolle 34 aufweisen, deren Rotationsachse RA1 parallel zu den Gelenkachsen GA1, GA2 ausgerichtet ist, und kann zumindest eine weitere drehbare Laufrolle 36 aufweisen, deren Rotationsachse RA3 vorzugsweise lotrecht zu den Gelenkachsen GA1, GA2 ausgerichtet ist.

Im Betrieb des Läufers stehen die ersten und zweiten Laufrollen 34, 35 der ersten und zweiten Führungs- und Lagereinrichtung 32.1, 32.2 mit der Führungsschiene 30, genauer gesagt mit deren ersten Führungsflächen 30.1, 30.2 in Wirkverbindung, beispielsweise in Wälzkontakt, wodurch Kräfte hervorgerufen werden, die auf die Laufrollen 34, 35 senkrecht zu deren jeweiliger Rotationsachse RA1, RA2 wirken. Aufgrund des Hebelarmes zwischen den Rotationsachsen RA1, RA2 und der jeweiligen Gelenkachse GA1 und GA2 bewirken die Kräfte ein Drehmoment um die Gelenkachsen GA1, GA2. Dabei ist das von der ersten Laufrolle 34 hervorgerufene Drehmoment zum von der zweiten Laufrolle 35 hervorgerufenen Drehmoment aufgrund der bezüglich der Gelenkachse GA1, GA2 gegenüberliegenden Anordnung der Laufrollen 34, 35 entgegengesetzt gerichtet.

Folglich stellt sich im Betrieb eines Läufers 3 eine von den hervorgerufenen Drehmomenten abhängige Schwenkstellung der ersten bzw. zweiten Führungs- und Lagereinrichtung 32.1, 32.2 um die Gelenkachse GA1, GA2 ein, sodass sich die von der ersten Laufrolle 34 und der zweiten Laufrolle 35 hervorgerufenen Drehmomente im Gleichgewicht befinden und gegenseitig aufheben.

Da die weitere Laufrolle 36 an der Führungs- und Lagereinrichtung 32.1, 32.2 verschwenkbar angeordnet ist, führt ein Verschwenken der jeweiligen Führungs- und Lagereinrichtung 32.1, 32.2 gleichzeitig zu einem Verschwenken der Rotationsachse RA3 der weiteren Laufrolle 36 um die Gelenkachse GA1, GA2. Schneidet die Rotationsachse RA3 die Gelenkachse GA1, GA2 und ist die Rotationsachse RA3 ferner lotrecht zu den Rotationsachsen RA1 und RA2 ausgerichtet, so erfolgt eine besonders präzise Ausrichtung der Rotationsachse RA3.

Bevorzugt sind die erste und zweite Laufrolle 34, 35 derart dimensioniert und beidseitig der jeweiligen Gelenkachse GA1 und GA2 angeordnet, dass die Rotationsachse RA3 der weiteren Laufrolle 34, 35 senkrecht zur Transportrichtung TR ausgerichtet ist, wenn sich der Läufer 3 in einem Geradenabschnitt G1, G2 der Transportstrecke TS befindet. Zusätzlich oder alternativ bevorzugt sind die erste und zweiten Laufrolle 34, 35 derart dimensioniert und beidseitig der jeweiligen Gelenkachse GA1 und GA2 angeordnet, dass die Rotationsachse RA3 der weiteren Laufrolle 34, 35 zu einem Kurven- bzw. Bogenmittelpunkt hin orientiert ist, wenn sich der Läufer 3 in einem entsprechenden Bogenabschnitt B1, B2 der Transportstrecke TS befindet.

Durch die Ausrichtung der Rotationsachsen RA3 der weiteren Laufrollen 36 hin zum Mittelpunkt eines Bogenabschnittes B1, B2 der Transportstrecke TS vollziehen die Laufrollen 36 im Kontakt mit den zweiten Führungsflächen 30.1, 30.2 eine reine Wälz- bzw. Abrollbewegung, wodurch der Verschleiß der Rollen minimiert wird. Die Führungs- und Lagereinrichtungen 32.1, 32.2 stellen folglich ein sogenanntes Lenk-Achs-System dar und bilden jeweils eine Lenkeinheit für den Läufer 3 aus. Die ersten und zweiten Laufrollen 34, 35 folgen in den Bogenabschnitten B1 und B2 einer beispielsweise krümmungsstetigen Führungsbahn, die durch die erste Führungsschiene 30 beispielsweise durch die ersten Führungsflächen 30.1, 31.1 vorgegeben ist, und richten die weiteren Laufrollen 36 mit deren Rotationsachsen RA3 in Richtung des Krümmungsmittelpunkts der Führungsschiene 30, 31 aus.

In den Figuren 5 bis 10 sind verschiedene Ausführungsformen eines Läufers 3 zum Einsatz in einem Transportsystem 1 dargestellt.

Die Läufer weisen, wie oben bereits kurz angedeutet, einen Grundkörper GK auf, der eine Oberseite 3.1 und eine der Oberseite gegenüberliegende Unterseite 3.2 aufweist. Der Grundkörper GK weist ferner eine erste Seite S1 und eine der ersten Seite S1 bezüglich einer Mittelebene ME gegenüberliegende zweite Seite S2 auf. Bevorzugt sind die erste Seite S1 und die zweiten Seite S2 des Grundkörpers GK bezüglich der Mittelebene symmetrisch ausgebildet, sodass eine besonders gleichmäßige Führung des Läufers 3 aufgrund des symmetrischen Trägheitsverhaltens möglich ist. Jedoch sind auch asymmetrische Ausgestaltungen des Grundkörpers GK vom Erfindungsgedanken umfasst.

An der ersten Seite S1 des Grundkörpers GK sind zwei Führungs- und Lagereinrichtungen 32.1, 32.2 jeweils um eine Gelenkachse GA1, GA2 schwenkbar angeordnet. Die Gelenkachsen GA1 und GA2 sind lotrecht zur Mittelebene ME orientiert und spannen eine Achsebene AE auf, die zwischen der Oberseite 3.1 und der Unterseite 3.2 des Grundkörpers GK verläuft.

Zur Vereinfachung der Beschreibung der folgenden Ausführungsvarianten wird auf ein kartesisches Koordinatensystem zurückgegriffen, wobei die x-Achse des Koordinatensystems der Transportrichtung TR entspricht. Die y-Achse des Koordinatensystems ist parallel zu den Gelenkachsen GA1 und GA2 und damit senkrecht zur Mittelebene ME ausgerichtet. Dementsprechend ist die z-Achse des Koordinatensystems senkrecht zur Achsebene AE ausgerichtet.

Sowohl die erste als auch die zweite Führungs- und Lagereinrichtung 31.1 und 31.2 weisen zumindest eine erste Laufrolle 34 mit einer Rotationsachse RA1 und eine zweite Laufrolle 35 mit einer Rotationsachse RA2 auf, die bezogen auf die jeweilige Gelenkachse GA1, GA2 gegenüberliegend, bevorzugt äquidistant gegenüberliegend, angeordnet sind. Eine weitere Laufrolle 36 ist jeweils an einer Position an der Führungs- und Lagereinrichtung 31.1, 31.2 vorgesehen, die sich mittig zwischen zu den Rotationsachsen RA1 und RA2 befindet. Bevorzugt ist die Rotationsachse RA3 der weiteren Laufrolle 36 zu den Rotationsachsen RA1 und RA2 der ersten und zweiten Laufrollen 34, 35 senkrecht orientiert ist und schneidet die Gelenkachse GA1 bzw. GA2.

Der Läufer 3 ist dazu vorgesehen, im Zusammenwirken mit einer ortsfesten Laufschiene 2 ein Transportsystem 1 zur Beförderung von Gegenständen entlang einer Transportstrecke TS auszubilden. Wie vorstehend erläutert, weist die Laufschiene 2 zumindest abschnittsweise entlang der Transportstrecke TS eine erste Führungsschiene 30 sowie eine der ersten Führungsschiene 30 bezüglich der Mittelebene ME des Läufers 3 gegenüberliegende, zweite Führungsschiene 31 auf.

Die zumindest eine erste und zumindest eine zweite drehbare Laufrolle 34, 35 der ersten und zweiten Führungs- und Lagereinrichtung 32.1, 32.2 des zumindest einen Läufers 3 sind im Betrieb von einer parallel zur ersten und zweiten Gelenkachse GA1, GA2 ausgerichteten ersten Führungsfläche 30.1 der ersten Führungsschiene 30 des Transportsystems 1 geführt.

Die zumindest eine weitere drehbare Laufrolle 36 der ersten und zweiten Führungs- und Lagereinrichtung 32.1, 32.2 wird von einer zur ersten Führungsfläche 30.1 lotrechten zweiten Führungsfläche 30.2, 31.2 geführt.

Folglich sind durch die beiden an der ersten Seite S1 des Grundkörpers GK bereitgestellten Führungs- und Lagereinrichtungen 32.1, 32.2 zwei Lenkeinheiten für den Läufer 3 in der Führungsschiene 30 eines Transportsystems bereitgestellt, die voneinander in Transportrichtung TR beabstandet sind, sodass sich die Orientierung des Wagens um die z-Achse zwangsläufig aus der Führung der ersten und zweiten Führungs- und Lagereinrichtung 32.1, 32.2 ergibt.

Zur weiteren Führung wird eine dritte Führungs- und Lagereinrichtung 32.3 bereitgestellt, die zum Zusammenwirken mit der zweiten Führungsschiene 31, insbesondere mit den ersten und zweiten Führungsflächen 31.1, 31.2 der zweiten Führungsschiene 31, ausgestaltet ist.

Die dritte Führungs- und Lagereinrichtung 32.3 weist zumindest eine erste drehbare Laufrolle 34 auf, deren Rotationsachse RA1 parallel zu den Gelenkachsen GA1, GA2 und damit zur Achsebene AE ausgerichtet ist, und weist zumindest eine weitere drehbare Laufrolle 36 auf, deren Rotationsachse RA3 lotrecht zu den Gelenkachsen GA1, GA2 ausgerichtet ist.

Im Betrieb ist die zumindest eine erste drehbare Laufrolle 34 der dritten Führungs- und Lagereinrichtung 32.3 des zumindest einen Läufers 3 von einer parallel zur ersten und zweiten Gelenkachse GA1, GA2 ausgerichteten ersten Führungsfläche 31.1 der zweiten Führungsschiene 31 des Transportsystems 1 geführt und die zumindest eine weitere drehbare Laufrolle 36 der dritten Führungs- und Lagereinrichtung 32.3 ist von einer zur ersten Führungsfläche 31.1 lotrechten zweiten Führungsfläche 31.2 der zweiten Führungsschiene 31 geführt.

Unabhängig von der konkreten Ausgestaltung des Läufers 3, insbesondere des Grundkörpers GK, kann der Läufer 3 in Transportrichtung TR betrachtet bezüglich einer Symmetrieebene SE, die von der ersten Gelenkachse GA1 gleich weit beabstandet ist wie von der zweiten Gelenkachse GA2 und senkrecht zur Transportrichtung orientiert ist, symmetrisch aufgebaut sein, sodass sich das Lauf- und Führungsverhalten des Läufers 3 auch bei einer Umkehr der Bewegungsrichtung nicht ändert.

In einer bevorzugten Ausführungsform, in der die dritte Führungs- und Lagereinrichtung 32.3 beispielsweise nicht verschwenkbar ausgebildet ist, verläuft die Rotationsachse RA1 der ersten Laufrolle 34 der dritten Führungs- und Lagereinrichtung 32.3 in der Achsebene AE.

Insbesondere, wenn die dritte Führungs- und Lagereinrichtung 32.3 nicht verschwenkbar ausgeführt ist, kann die dritte Führungs- und Lagereinrichtung 32.3 beispielsweise derart zwischen der ersten und zweiten Gelenkachse GA1, GA2 angeordnet sein, dass sie in Transportrichtung TR gleich weit von der ersten Gelenkachse GA1 wie von der zweiten Gelenkachse GA2 beabstandet ist. In diesem Fall entspricht die Abrollrichtung der weiteren Laufrolle 36 der dritten Führungs- und Lagereinrichtung 32.3 der Bewegungsrichtung des Anbringungspunktes der weiteren Laufrolle 36 am Grundkörper, sodass die weitere Laufrolle 36 an der zweiten Führungsfläche 31.2 ohne eine gleitende Bewegungskomponente abrollt. Bevorzugt sind die Rotationsachse RA1 der ersten Laufrolle 34 der dritten Führungs- und Lagereinrichtung 32.3 sowie die Rotationsachse RA3 der weiteren Laufrolle 36 der dritten Führungs- und Lagereinrichtung 32.3 in diesem Fall in der Symmetrieebene SE liegend angeordnet.

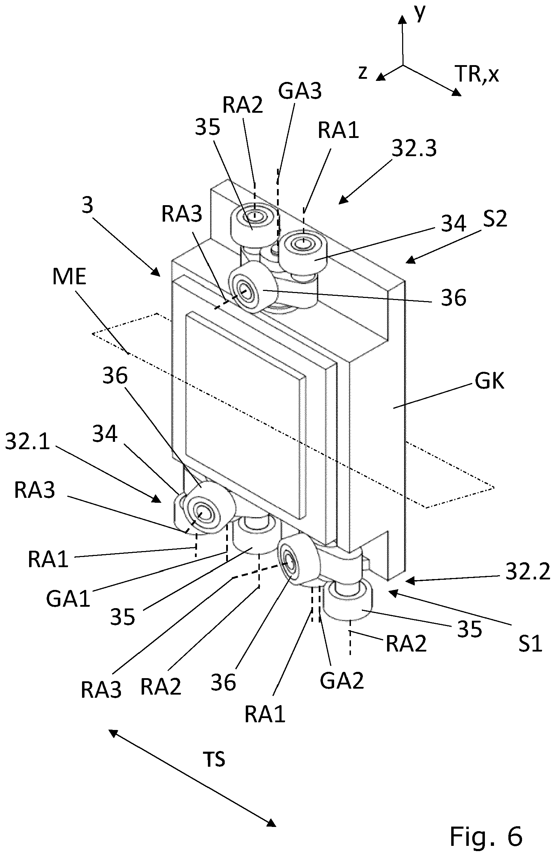

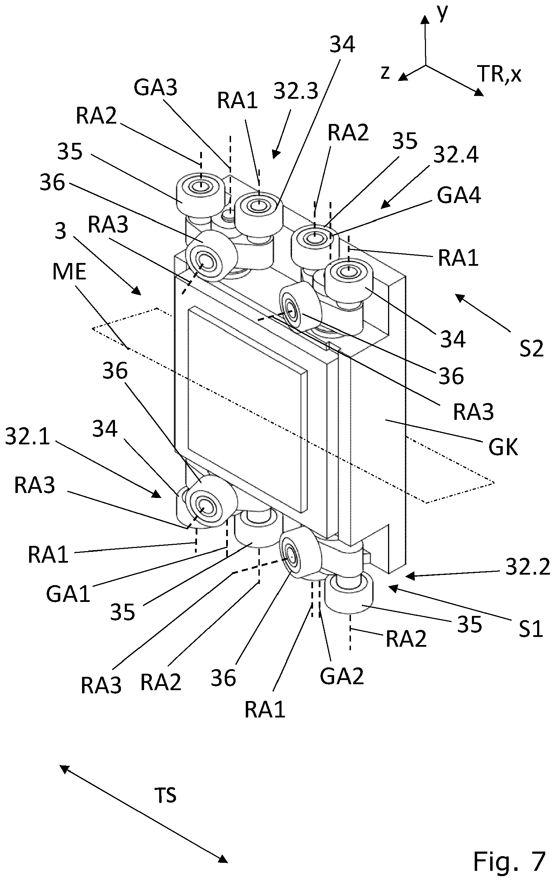

Der Aufbau des Läufers 3 an der ersten Seite S1 des Grundkörpers GK in den folgenden Ausführungsvarianten kann mit dem Aufbau des Läufers 3 gemäß der in Figur 5 dargestellten Ausführungsvariante identisch sein, sodass auf eine wiederholte Beschreibung der Merkmale verzichtet wird. Außerdem sind die Symmetrieebene SE und die Achsebene AE in den Figuren 6 und 7 aus Gründen der Übersichtlichkeit nicht dargestellt. Gleichwohl können auch diese Ebenen in den dargestellten Ausführungsbeispielen Verwendung finden, insbesondere können die Gelenkachsen GA1, GA2, GA3 und/oder GA4 in einer gemeinsamen Achsebene AE liegen, und/oder der Läufer 3 kann auch in den folgenden Ausführungsvarianten bezüglich einer beliebigen Symmetrieebene SE, die beispielsweise gleich zur im Zusammenhang mit Figur 5 beschriebenen Symmetrieebene SE definiert sein kann, symmetrisch aufgebaut sein.

Der Läufer 3 gemäß der in Figur 6 dargestellten Ausführungsvariante weist eine dritte Führungs- und Lagereinrichtung 32.3 auf, die bezüglich einer dritten Gelenkachse schwenkbar am Grundkörper GK des Läufers 3 angeordnet ist. Zusätzlich zur ersten Laufrolle 34 und zur weiteren Laufrolle 36 weist die dritte Führungs- und Lagereinrichtung 32.3 eine zweite Laufrolle 35 auf, deren Rotationsachse RA2 parallel zur Rotationsachse RA1 der ersten Laufrolle 34 sowie senkrecht zur Rotationsachse RA3 der weiteren Laufrolle 36 orientiert ist. Die zweite Laufrolle 36 ist derart an der dritten Führungs- und Lagereinrichtung 32.3 angeordnet, dass die Rotationsachse RA2 der zweiten Laufrolle 35 bezüglich der dritten Gelenkachse GA3 in Transportrichtung TR gegenüberliegend zur Rotationsachse RA1 der ersten Laufrolle 34 angeordnet ist, insbesondere können die Rotationsachse RA1 der ersten Laufrolle 34 und die Rotationsachse RA2 der zweiten Laufrolle von der Gelenkachse GA3 gleich weit beabstandet sein.

Die Rotationsachse RA3 der weiteren Laufrolle 36 der dritten Führungs- und Lagereinrichtung 32.3 ist um die Gelenkachse GA3 schwenkbar ausgeführt. Insbesondere kann die Rotationsachse RA3 der weiteren Laufrolle 36 mittig zwischen den Rotationsachsen RA1, RA2, der ersten und zweiten Laufrolle 34, 35 angeordnet sein und/oder die Gelenkachse GA3 schneiden und/oder zur Gelenkachse GA3 im Wesentlichen lotrecht ausgerichtet sein. Somit erfolgt auch bei der dritten Führungs- und Lagereinrichtung 32.3 eine Anpassung des Anstellwinkels der Rotationsachse RA3 der weiteren Laufrolle 36 abhängig von der auf die erste und zweiten Laufrolle 34, 35 der dritten Führungs- und Lagereinrichtung 32.3 wirkenden Lagerkräfte.

Beispielsweise kann die dritte Führungs- und Lagereinrichtung 32.3 baugleich zur ersten Führungs- und Lagereinrichtung 32.1 und/oder zur zweiten Führungs- und Lagereinrichtung 32.2 ausgeführt sein.

In einer bevorzugten Ausführungsvariante ist die dritte Führungs- und Lagereinrichtung 32.3 derart verschwenkbar an der zweiten Seite S2 des Grundkörpers GK angeordnet, dass die Gelenkachse GA3 in der Symmetrieebene SE verläuft, d.h. in Transportrichtung TR gesehen mittig zwischen den Gelenkachse GA1 und GA2 angeordnet ist. In diesem Fall liegt die Gelenkachse GA3 und damit auch die die Gelenkachse GA3 eventuell schneidende Rotationsachse RA3 der weiteren Laufrolle 36 der dritten Führungs- und Lagereinrichtung 32.3 an dem Massepunkt des Läufers 3, um den sich der Läufer 3 verschwenkt, wenn er einen Bogenabschnitt B1, B2 der Transportstrecke TS durchläuft.

Folglich vollzieht die dritte Führungs- und Lagereinrichtung 32.3 in dieser Ausführungsform lediglich geringfügige Verschwenkbewegungen, die beispielsweise dadurch bedingt sein können, dass Fertigungs- und Montagetoleranzen oder Verformungen, die durch auf den Läufer 3 wirkende Belastungen hervorgerufen werden, ausgeglichen werden.

Beim Einsatz in einem Transportsystem 1 kann die zumindest eine zweite drehbare Laufrolle 35 der dritten Führungs- und Lagereinrichtung 32.3 des Läufers 3 wie die erste drehbare Laufrolle 34 von der ersten Führungsfläche 31.1 der zweiten Führungsschiene 31 des Transportsystems 1 geführt sein.

Wie in Figur 7 dargestellt, kann in einer bevorzugten Ausführungsform an der zweiten Seite S2 des Grundkörpers ferner eine vierte Führungs- und Lagereinrichtung 32.4 angeordnet sein. Diese kann um eine zur dritten Gelenkachse GA3 zumindest in Transportrichtung TR parallelverschobene vierte Gelenkachse GA4 schwenkbar am Grundkörper GK angeordnet sein.

Die vierte Führungs- und Lagereinrichtung 32.4 kann eine erste und eine zweite drehbare Laufrolle 34, 35 aufweisen, deren Rotationsachsen RA1, RA2 zur vierten Gelenkachse GA4 in bezüglich der Transportrichtung TR entgegengesetzte Richtungen parallelverschoben sind, wodurch die Rotationsachse RA1, RA2 einer Laufrolle 34, 35 zur Rotationsachse RA2, RA1 der jeweils anderen Laufrolle 35, 34 in Transportrichtung TR beabstandet ist. Bevorzugt ist der Abstand zwischen der Rotationsachse RA1 der ersten Laufrolle 34 und der Gelenkachse GA4 gleich dem Abstand zwischen der Rotationsachse RA2 der zweiten Laufrolle 35 und der Gelenkachse GA4.

Die vierte Führungs- und Lagereinrichtung 32.4 weist ferner zumindest eine weitere drehbare Laufrolle 36 auf, deren Rotationsachse RA3 bevorzugt mittig zwischen der Rotationsachse RA1 der ersten Laufrolle 34 und der Rotationsachse RA2 der zweiten Laufrolle 35 angeordnet ist. Bevorzugt ist die Rotationsachse RA3 lotrecht zur vierten Gelenkachse GA4 ausgerichtet und schneidet die Gelenkachse GA4. Folglich vollführt die Rotationsachse RA3 eine Schwenkbewegung um die vierte Gelenkachse GA4, wenn die Führungs- und Lagereinrichtung 32.4 um die vierte Gelenkachse GA4 verschwenkt wird.

Somit sind in der in Figur 7 dargestellten Ausführungsform sowohl auf der ersten Seite S1 als auch auf der zweiten Seite S2 des Grundkörpers jeweils zumindest zwei Führungs- und Lagereinrichtungen 32.1, 32.2, 32.3, 32.4 vorgesehen, was eine besonders zuverlässige Führung des Läufers 3 in den Führungsschienen 30, 31 ermöglicht, wodurch durch die Läufer 3 schwere Gegenstände präzise bewegt werden können.

Bevorzugt sind die Führungs- und Lagereinrichtungen 32.1, 32.2, 32.3, 32.4 bezüglich der zwischen der ersten Seite S1 und der zweiten Seite S2 liegenden Mittelebene ME und/oder bezüglich der zwischen der ersten und zweiten Gelenkachse GA1, GA2 liegend Symmetrieebene symmetrisch angeordnet. Beispielsweise können sowohl die erste Gelenkachse GA1 und die dritte Gelenkachse GA3 als auch die zweite Gelenkachse GA2 und die vierte Gelenkachse GA4 jeweils kollinear zueinander angeordnet sein. Ein derart symmetrischer Aufbau des Läufers 3 bewirkt eine besonders gleichmäßige Lastverteilung im Grundkörper GK und eine gleichmäßige Abstützung der Lasten über die Führungs- und Lagereinrichtungen 32.1, 32.2, 32.3, 32.4, sodass eine besonders hohe Tragfähigkeit vom Läufer 3 und damit vom Transportsystem 1 bereitgestellt werden kann.

Beim Einsatz eines Läufers 3 gemäß der eben beschriebenen Ausführungsvariante in einem Transportsystem 1 mit einer ersten und zweiten Führungsschiene 30, 31 kann die zumindest eine erste und zweite drehbare Laufrolle 34, 35 der vierten Führungs- und Lagereinrichtung 32.4 des Läufers 3 von der ersten Führungsfläche 31.1 der zweiten Führungsschiene 31 des Transportsystems 1 geführt sein. Entsprechend kann die zumindest eine weitere drehbare Laufrolle 36 der vierten Führungs- und Lagereinrichtung 32.4 von der zweiten Führungsfläche 31.2 der zweiten Führungsschiene 31 des Transportsystems 1 geführt sein.

Bevorzugt sind die Führungs- und Lagereinrichtungen 32.1, 32.2, 32.3, 32.4 baugleich ausgestaltet und angeordnet, sodass der Läufer 3 eine hohe Anzahl an Gleichteilen aufweist.

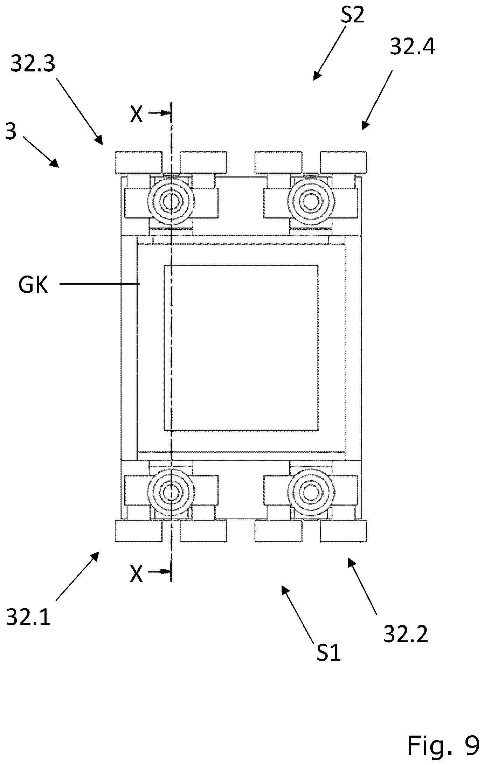

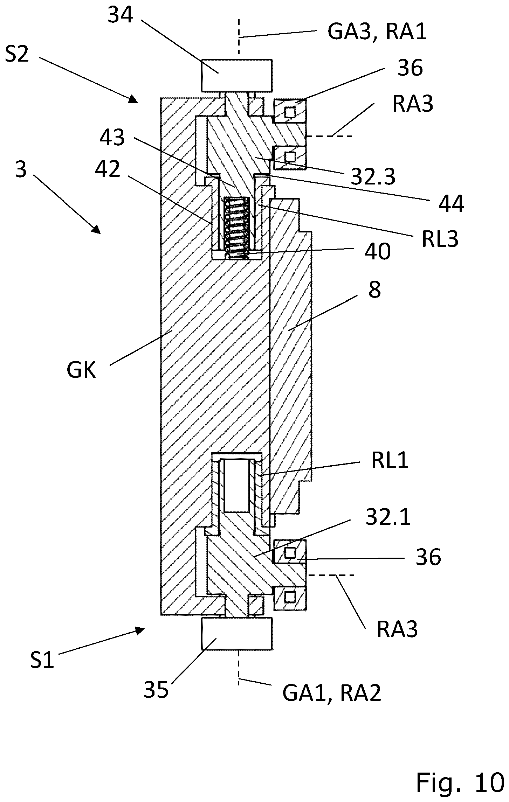

Die Gelenkachsen GA1, GA2, GA3 und GA4 der Führungs- und Lagereinrichtungen 32.1, 32.2, 32.3, 32.4 können beispielsweise in Form eines Bolzens oder eines Stifts ausgestaltet sein und mit einem ersten freien Ende im Grundkörper GK des Läufers 3 aufgenommen sein. Bevorzugt sind die Gelenkachsen GA1, GA2, GA3, GA4 drehfest in dem entsprechenden Läufer 3 aufgenommen, bzw. angeordnet. Die Führungs- und Lagereinrichtungen 32.1, 32.2, 32.3, 32.4 können beispielsweise form-, -stoff und/oder kraftschlüssig auf den Gelenkachsen GA1, GA2, GA3, GA4 angeordnet sein. Insbesondere kann es bevorzugt sein, die Führungs- und Lagereinrichtungen 32.1, 32.2, 32.3, 32.4 derart auf den Gelenkachsen GA1, GA2, GA3 und GA4 anzuordnen, dass sie in Längsrichtung der Gelenkachsen GA1, GA2, GA3 und GA4 unbeweglich sind, jedoch bezüglich der jeweiligen Gelenkachsen GA1, GA2, GA3 und GA4 drehbar aufgenommen sind. Alternativ können die Führungs- und Lagereinrichtungen 32.1, 32.2, 32.3, 32.4 derart auf den Gelenkachsen GA1, GA2, GA3 und GA4 angeordnet sein, dass sie in Längsrichtung der Gelenkachsen GA1, GA2, GA3 und GA4 beweglich sind, wie im Zusammenhang mit Figur 9 und 10 erläutert wird. Zur Vereinfachung der Verschwenkbarkeit kann an den Gelenkachsen GA1, GA2, GA3 und GA4 beispielsweise ein Gleit- oder Wälzlager zur Abstützung der Führungs- und Lagereinrichtungen 32.1, 32.2, 32.3, 32.4 vorgesehen sein.

Die Gelenkachsen GA1, GA2, GA3 und GA4 können beispielsweise an einem dem ersten freien Ende gegenüberliegenden zweiten Ende einen Bund, einen Sicherungsring oder ein anderes Fixiermittel aufweisen, um die Führungs- und Lagereinrichtungen 32.1, 32.2, 32.3, 32.4 auf der Gelenkachse GA1, GA2, GA3 und GA4 zu fixieren.

In einer bevorzugten Ausführungsform weisen die am Läufer 3 vorgesehenen Laufrollen 34...36 identisch zueinander ausgestaltete Außendurchmesser auf. Insbesondere können die Laufrollen 34...36 vollständig identisch ausgebildet sein. Die Laufrollen 34...36 können mittels Rollenlager oder Gleitlager drehbar um die entsprechende Rotationsachse RA1, RA2, RA3 gelagert sein. Auch können die Laufrollen 34...36 eine identische Breite der Lauffläche aufweisen. Die jeweilige Lauffläche einzelner oder sämtlicher Laufrollen 34...36 kann aus einem Kunststoff gebildet sein.

Insbesondere kann die Länge der Rotationsachse RA1, RA2, RA3 an die Breite der entsprechend dort aufgenommenen Laufrolle 34...36, insbesondere an die Breite von deren Lauffläche, angepasst.

Abhängig von der Ausgestaltung des Läufers 3 kann die Ausgestaltung der Führungsschienen 30, 31 gewählt sein. Ist der Läufer 3 bezüglich der Mittelebene ME asymmetrisch aufgebaut, beispielsweise, weil - wie insbesondere in den in Figuren 5 und 6 dargestellten Ausführungsvarianten - an der ersten Seite S1 des Grundkörpers GK eine erste und eine zweite Führungs- und Lagereinrichtung 32.1, 32.2 angeordnet sind und an der zweiten Seite S2 des Grundkörpers GK lediglich eine dritte Führungs- und Lagereinrichtung 32.3 angeordnet ist, so kann die erste Führungsschiene 30 verschieden von der zweiten Führungsschiene 31 ausgestaltet sein.

Dies ist beispielsweise dann bevorzugt, wenn die Gelenkachsen GA1, GA2, GA3 allesamt in derselben Achsebene AE angeordnet sind und die Gelenkachse GA3 in Transportrichtung TR gesehen zwischen den Gelenkachsen GA1 und GA2 angeordnet ist. In diesem Fall kann die erste Führungsfläche 30.1 der ersten Führungsschiene 30, die mit den ersten und zweiten Laufrollen 34, 35 der ersten und zweiten Führungs- und Lagereinrichtung 32.1, 32.2 zusammenwirkt, in den Bogenabschnitten B1, B2 der Transportstrecke TS beispielsweise einen größeren oder kleineren Krümmungsradius aufweisen als die erste Führungsfläche 31.1 der zweiten Führungsschiene 31, die mit den ersten und zweiten Laufrollen 34, 35 der dritten Führungs- und Lagereinrichtung 32.3 zusammenwirkt. Daran angepasst können die zweiten Führungsflächen 30.2, 31.2 der jeweiligen Führungsschienen 30, 31 ausgestaltet sein. Jedoch kann eine solche asymmetrische Ausgestaltung der Führungsschienen 30, 31 auch bei der Verwendung von anderen Ausführungsvarianten eines Läufers 3 angewendet werden.

Alternativ können die Führungsschienen 30, 31 in den Bogenabschnitten B1, B2 der Transportstrecke identisch ausgestaltet sein. Beispielsweise können die Führungsflächen 30.1, 31.1 der Führungsschienen 30, 31 insbesondere dann eine identische Krümmung aufweisen, wenn der Läufer 3 bezüglich der Mittelebene ME symmetrisch ausgestaltet ist.

Zusätzlich oder alternativ zu den beiden soeben aufgezeigten Ausführungsvarianten der Führungsschienen 30, 31 können die Führungsschienen 30, 31 in den Geradenabschnitten der Transportstrecke TS identisch oder verschieden voneinander ausgestaltet sein.

Ferner können die Laufrollen 34, 35 und 36 gegen die jeweilige Führungsschiene 30, 31, genauer gegen die Führungsflächen 30.1, 30.2, 31.1 und 31.2, verspannt sein. Hierfür können zu zumindest einer Laufrolle 34, 35, 36, bevorzugt zu einer jeden Laufrolle 34, 35, 36, zusätzliche Laufrollen 37 vorgesehen sein. Die zusätzlichen Laufrollen 37 weisen dabei eine Rotationsachse auf, die zumindest parallel zur Rotationsachse RA1, RA2, RA3 der Laufrollen 34, 35, 36, bevorzugt kollinear zur Rotationsachse RA1, RA2, RA3 der Laufrollen 34, 35, 36, ausgestaltet ist.

Das nachstehend anhand des Zusammenwirkens von erster und/oder zweiter Laufrolle 34, 35 mit der jeweiligen Führungsschiene 30, 31 erklärte Wirkprinzip ist ebenso auf die Wirkverbindung zwischen den weiteren Rollen 36 mit der jeweiligen Führungsschiene 30, 31 anwendbar, wenn an diesen zusätzliche Rollen 37 bereitgestellt werden.

Zur Wirkverbindung mit den zusätzlichen Laufrollen 37 weisen die erste und die zweite Führungsschiene 30, 31 bevorzugt eine dritte Führungsfläche 30.3, 31.3 auf. Mehr im Detail ist die jeweils erste Laufrolle 34 oder zweite Laufrolle 35 in dieser Ausführungsvariante in einem Abschnitt der ersten Führungsfläche 30.1, 31.1 und die jeweils zusätzliche Laufrolle 37 in einem Abschnitt der dritten Führungsfläche 30.3, 31.3 anliegend und zueinander vorgespannt geführt. Ferner sind der Abschnitt der ersten Führungsfläche 30.1, 31.1 und der Abschnitt der dritten Führungsfläche 30.3, 31.3, an der die jeweiligen Laufrollen geführt sind, entlang der Rotationsachsen RA1, RA2 zueinander versetzt und einander gegenüberliegend vorgesehen.

Dabei können die jeweiligen Rotationsachsen RA1, RA2 des entsprechen Läufers 3 als einteilige insbesondere einstückige Gelenkstange ausgebildet sein. Die Rotationsachsen RA1, RA2 können beispielsweise als Gelenkbolzen ausgebildet sein.

Die erste Laufrolle 34 und/oder die zweite Laufrolle 35 ist an dem Abschnitt der ersten Führungsfläche 30.1 anliegend gegen die an dem Abschnitt der dritten Führungsfläche 30.3 jeweils anliegende zusätzliche Laufrolle 37 in der ersten Führungsschiene 30 vorgespannt geführt. Ebenso ist die jeweils bezüglich der Mittelebene ME gegenüberliegende erste Laufrolle 34 und/oder die gegenüberliegende zweite Laufrolle 35 an dem Abschnitt der ersten Führungsfläche 31.1 anliegend gegen die jeweilige an dem Abschnitt der dritten Führungsfläche 31.3 anliegende zusätzliche Laufrolle 37 in der zweiten Führungsschiene 31 vorgespannt geführt.

Durch die vorgespannte Führung der jeweiligen Laufrollen 34 und/oder 35 in der ersten und zweiten Führungsschiene 30, 31 wirken im Bereich der entsprechenden Führungs- und Lagereinrichtung 32 jeweils Vorspannkräfte, die entlang der jeweiligen Rotationsachse RA1, RA2 versetzt und gegenüberliegend, also aufeinander zu gerichtet sind und damit ein Verspannen der entsprechenden Führungs- und Lagereinrichtung 32 sicherstellen.

Wird ein entsprechender Läufer 3 entlang der Transportstrecke TS bewegt, so drehen sich die jeweiligen ersten und zweiten Laufrollen 34, 35 im Vergleich zu den zusätzlichen Laufrollen 37 hierdurch jeweils gegensinnig zueinander um die durch die Rotationsachsen RA1, RA2 gebildeten Drehachsen. Die gegensinnige Drehung der jeweiligen ersten und zweiten Laufrollen 34, 35 zu den jeweilige zusätzlichen Laufrollen 37 entsteht durch eine jeweils gestufte Ausbildung der Führungsschienen 30, 31, so dass sich die ersten und zweiten Laufrollen 34, 35 nur an dem Abschnitt der jeweiligen ersten Führungsfläche 30.1, 31.1 und die zusätzlichen Laufrollen 37 nur an dem Abschnitt jeweiligen dritten Führungsfläche 30.3, 31.3 anliegend abrollen bzw. abwälzen.

Dabei können die jeweiligen Laufrollen 34, 35, 36, 37 identisch zueinander ausgebildet sein. Insbesondere weisen die Laufrollen 34, 35, 36, 37 einen identischen Durchmesser im Bereich der jeweiligen Lauffläche, d.h. einen identischen Außendurchmesser, sowie ein identische Breite der Lauffläche auf. Dabei kann die jeweilige Lauffläche sämtlicher Laufrollen 34...37 aus einem Kunststoff gebildet sein.

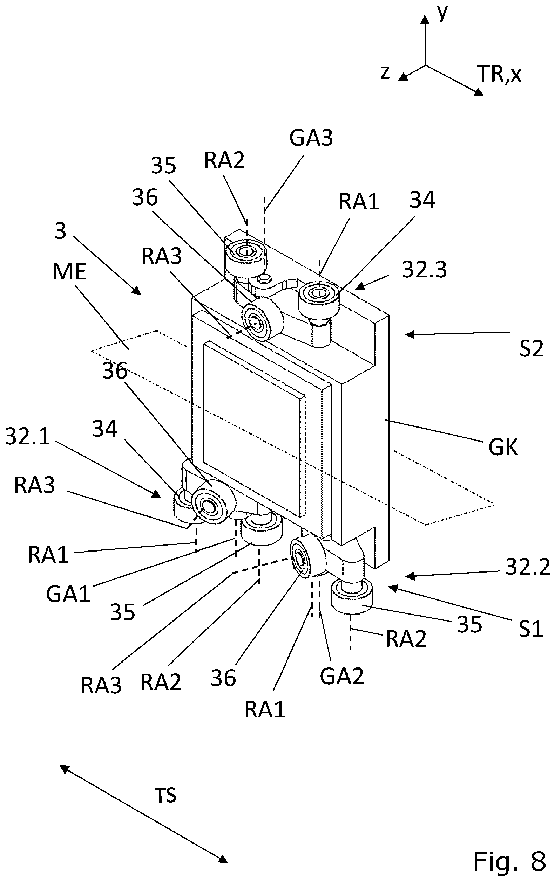

In Figur 8 ist eine weitere Ausführungsvariante eines Läufers 3 zur Verwendung in einem Transportsystem 1 dargestellt. Auch wenn die Ausführungsvariante lediglich drei Führungs- und Lagereinrichtungen 32.1, 32.2, 32.3 aufweist, sind die nachstehenden Ausführungen ebenso auf Ausführungsvarianten mit vier oder mehr Führungs- und Lagereinrichtungen 32.1, 32.2, 32.3, 32.4 anwendbar.

Zumindest eine der Führungs- und Lagereinrichtungen 32.1, 32.2, 32.3, insbesondere eine jede der Führungs- und Lagereinrichtungen 32.1, 32.2, 32.3, weist eine erste und eine zweite Laufrolle 34, 35 mit einer jeweiligen Rotationsachse RA1, RA2 auf. Die Rotationsachsen RA1 und RA2 sind, in Transportrichtung TR gesehen, beidseitig zur jeweiligen Gelenkachse GA1, GA2, GA3 der Führungs- und Lagereinrichtungen 32.1, 32.2, 32.3 angeordnet. Dabei weist die Rotationsachse RA1 einen im Vergleich zur Rotationsachse RA2 unterschiedlichen Abstand zur Gelenkachse GA1, GA2, GA3 auf. Folglich ist die jeweilige Gelenkachse GA1, GA2 und GA3 nicht mittig zwischen den Rotationsachsen RA1 und RA2 angeordnet, sondern zu einer Seite hin versetzt.

Die Rotationsachse RA3 der weiteren Laufrolle 36 ist dagegen mittig zwischen den Rotationsachsen RA1 und RA2 der Laufrollen 34, 35 angeordnet, sodass die Rotationsachse RA3 die Gelenkachse GA1, GA2, GA3 der zugehörigen Führungs- und Lagereinrichtung 32.1, 32.2, 32.3 nicht schneidet. Dies ermöglicht es, die Gelenkachsen GA1, GA2 und GA3 sowie die Rotationsachse RA3 der weiteren Laufrollen 36 derart auszugestalten, dass sie die Führungs- und Lagereinrichtung 32.1, 32.2, 32.3 durchdringen, wodurch die in den Achsen auftretenden Schnittmomente und -kräfte reduziert werden.

Auch eine außermittige Anordnung der Gelenkachse GA1, GA2, GA3 an der Führungs- und Lagereinrichtung 32.1, 32.2, 32.3 ermöglicht ein Verschwenken der Führungs- und Lagereinrichtungen 32.1, 32.2, 32.3 um die Gelenkachse GA1, GA2 und GA3 und damit eine Ausrichtung der Rotationsachse RA3 der weiteren Laufrollen 36 zum Mittelpunkt eines Bogenabschnittes B1, B2 der Transportstrecke 2, sodass auch bei außermittiger Anordnung der Gelenkachsen GA1, GA2 und GA3 ein verschließarmes und kostengünstiges Transportsystem 1 mit hoher Tragfähigkeit bereitgestellt wird.

In den Figuren 9 und 10 ist eine Ausführungsvariante eines Läufers 3 dargestellt, die eine vorgespannte Abstützung des Läufers in den Führungsschienen 30, 31 ermöglicht. Die hierfür erforderlichen konstruktiven Anpassungen können selbstredend in alle der vorstehend beschriebenen Ausführungsvarianten integriert werden. Figur 9 zeigt eine Draufsicht auf einen Läufer 3, der vier Führungs- und Lagereinrichtungen 32.1, 32.2, 32.3, 32.4 aufweist, von denen jeweils zwei an der ersten Seite S1 und zwei an der zweiten Seite S2 des Grundkörpers GK der Läufers 3 verschwenkbar angeordnet sind. Figur 10 stellt eine Schnittansicht entlang der in Figur 9 mit X-X bezeichneten Schnittline dar, die die Rotationsachsen RA3 der weiteren Laufrolle 36 der ersten Führungs- und Lagereinrichtung 32.1 und der dritten Führungs- und Lagereinrichtung 32.3 beinhaltet.

Wie sich aus der Schnittansicht ergibt, können die an der ersten Seite S1 des Grundkörpers GK angeordneten Führungs- und Lagereinrichtungen 32.1, 32.2 von den an der zweiten Seite S2 des Grundkörpers GK angeordneten Führungs- und Lagereinrichtungen 32.3, 32.4 verschieden ausgeführt sein, insbesondere können lediglich die an einer Seite S1 oder S2 angeordneten Führungs- und Lagereinrichtungen 32.1, 32.2 oder 32.3, 32.4 eine vorgespannte Lagerung aufweisen. Jedoch ist es auch vom Erfindungsgedanken umfasst, lediglich eine der Führungs- und Lagereinrichtungen 32.1, 32.2, 32.3, 32.4 oder eine beliebige Anzahl der Führungs- und Lagereinrichtungen 32.1, 32.2, 32.3, 32.4 in beliebiger Anordnung an der ersten Seite S1 und/oder der zweiten Seite S2 des Grundkörpers mit einer vorgespannten Lagerung auszugestalten.

Die an der zweiten Seite S2 des Grundkörpers GK angeordnete Führungs- und Lagereinrichtung 32.3 ist um die Gelenkachse GA3 schwenkbar. Zusätzlich ist die Führungs- und Lagereinrichtung 32.3 in Längsrichtung der Gelenkachse GA3 verschiebbar am Grundkörper angeordnet und weist eine Vorspanneinrichtung 40 auf, um die Führungs- und Lagereinrichtung 32.3 in Längsrichtung der Gelenkachse GA3 gegen eine Führungsschiene 31 vorzuspannen.

In der konkreten, dargestellten Ausführungsvariante ist die Führungs- und Lagereinrichtung 32.3 in einer Ausnehmung 42 des Grundkörpers GK angeordnet, die sich in Längsrichtung der Gelenkachse GA3 erstreckt. Zur Anordnung in der Ausnehmung 42 weist die Führungs- und Lagereinrichtung 32.3 einen Lagerzapfen 43 auf, der in der Ausnehmung 42 aufgenommen ist und sich von einem Absatz 44 der Führungs- und Lagereinrichtung 32.3 in Längsrichtung der Gelenkachse GA3 zu einem freien Ende hin erstreckt.

Der Lagerzapfen 43 ist in der Ausnehmung 42 gleitend aufgenommen, insbesondere mittels eines zwischen Lagerzapfen 43 und Ausnehmung 42 angeordneten Gleitlagers RL3, sodass er sowohl drehbar um die Gelenkachse GA3 ist als auch in Längsrichtung der Gelenkachse GA3 relativ zum Grundkörper GK verschieblich ist. Hierfür kann, insbesondere wenn keine zusätzlichen Lagermittel verwendet werden, zwischen Lagerzapfen 43 und Ausnehmung 42 beispielsweise eine Spielpassung ausgebildet sein.

Der Lagerzapfen 43 weist am freien Ende einen Federsitz, beispielsweise in Form einer Sacklochbohrung auf. Zum Ausbilden der Vorspanneinrichtung 40 ist zwischen dem Federsitz am freien Ende des Lagerzapfens 43 und dem Grund der Ausnehmung 42 eine Feder vorgesehen, bevorzugt eine Druckfeder, die, wenn sie zusammengedrückt wird, eine Rückstellkraft in Längsrichtung der Gelenkachse GA3 hervorruft, die vom Grundkörper GK weg ausgerichtet ist. Die Vorspanneinrichtung 40 ist damit geeignet, eine Vorspannkraft in Richtung der Gelenkachse GA3 zu erzeugen, die die weiteren Laufrollen 36 gegen die zweite Führungsfläche 30.2, 31.2 presst und damit eine zuverlässige und stabile Führung des Läufers 3 gewährleistet.

Folglich ist die Führungs- und Lagereinrichtung 32.3 stufenlos zwischen einer Stellung mit maximaler Vorspannung, in der die Feder zusammengedrückt ist, und einer Stellung mit minimaler Vorspannung, in der die Feder entspannt ist, beweglich. Die Bewegung der Führungs- und Lagereinrichtung 32.3 in Längsrichtung der Gelenkachse GA3 kann begrenzt sein, beispielsweise durch das Bereitstellen von Anschlägen und/oder die Geometrie der Vorspanneinrichtung 40. Insbesondere kann beispielsweise der Absatz 44 der Führungs- und Lagereinrichtung 32.3 den Verschiebeweg der Führungs- und Lagereinrichtung 32.3 begrenzen, wenn er am Grundkörper GK zur Anlage kommt. In Richtung vom Grundkörper GK weg kann der Verschiebeweg der Führungs- und Lagereinrichtung 32.3 beispielsweise durch einen vom Grundkörper GK bereitgestellten Anschlag begrenzt sein.

Zum Einsetzen eines Läufers 3, bei dem zumindest eine Führungs- und Lagereinrichtungen 32.1, 32.2, 32.3, 32.4 eine Vorspanneinrichtung 40 aufweist, in eine Laufschiene 2 kann eine Einführhilfe eingesetzt werden, welche die Vorspanneinrichtung(en) 40 des Läufers 3 in den maximal vorgespannten Zustand versetzt, wodurch der Abstand zwischen gegenüberliegenden Laufrollen 34, 35 minimiert wird. In anderen Worten werden die gegenüberliegenden Führungs- und Lagereinrichtungen 31.1 und 31.3 bzw. 31.2 und 31.4 zusammengedrückt. Damit wird ein Einfädeln des Läufers 3 zwischen den gegenüberliegenden Führungsschienen 30, 31 ermöglicht. Nach dem Einfädeln kann die Vorspanneinrichtung 40 entspannt werden, beispielsweise durch entfernen der Einführhilfe, wodurch sich der Abstand zwischen gegenüberliegenden Laufrollen 34, 35 vergrößert bis die weiteren Laufrollen 36 mit den zweiten Führungsflächen 30.2 und 31.2 in Kontakt kommen. So rasten die Laufrollen 34, 35 in die Führungsschienen 30, 31 ein.

Ferner geht aus Figur 10 hervor, dass die Führungs- und Lagereinrichtungen 32.1, 32.2, 32.3, 32.4 mittels Gleitlagern RL1, RL2, RL3 und RL4 im Grundkörper GK aufgenommen sein können, um ein Verschwenken der Führungs- und Lagereinrichtungen 32.1, 32.2, 32.3, 32.4 mit möglichst geringem Widerstand zu ermöglichen.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 1: Transportsystem
- 2: Laufschiene
- 2.1: Laufschienenmodul
- 3: Läufer
- 3.1: Oberseite
- 3.2: Unterseite
- 4: elektromagnetischer Antrieb
- 5: Antriebsmodul
- 6: Linearmotor
- 7: Stator
- 8: Permanentmagnet
- 9: Spulenelement
- 11: Haltemittel
- 12: Laufschienenkörper
- 13: Signalgeber

- 30: erste Führungsschiene
- 30.1: erste Führungsfläche
- 30.2: zweite Führungsfläche
- 31: zweite Führungsschiene
- 31.1: erste Führungsfläche
- 31.2: zweite Führungsfläche
- 32.1: erste Führungs- und Lagereinrichtung
- 32.2: zweite Führungs- und Lagereinrichtung
- 32.3: dritte Führungs- und Lagereinrichtung
- 32.4: vierte Führungs- und Lagereinrichtung
- 34...36: Laufrolle
- 37, 38: zusätzliche Laufrolle
- 40: Vorspanneinrichtung
- 42: Ausnehmung
- 43: Lagerzapfen
- 44: Absatz

- G1, G2: Geradenabschnitt
- B1, B2: Bogenabschnitt
- AE: Achsebene
- GK: Grundkörper
- GA1..GA4: Gelenkachse
- ME: Mittelebene
- TF: Transportfläche
- TS: Transportstrecke
- TR: Transportrichtung
- RA1, RA2, RA3: Rotationsachse
- RL1, RL2, RL3, RL 4: Rollenlager/Gleitlager
- SE: Symmetrieebene
- S1, S2: erste und zweite Seite
- x,y,z: Koordinatenachsen

## Patentansprüche

1. Läufer (3) für ein Transportsystem (1) zur Beförderung von Gegenständen entlang einer Transportstrecke (TS) in zumindest einer Transportrichtung (TR), wobei der Läufer (3) zumindest einen Permanentmagneten (8) und einen Grundkörper (GK) mit einer ersten Seite (S1) und einer der ersten Seite (S1) bezüglich einer die zumindest eine Transportrichtung (TR) beinhaltenden Mittelebene (ME) gegenüberliegenden zweiten Seite (S2) aufweist,
wobei an der ersten Seite (S1) des Grundkörpers (GK) zumindest eine erste Führungs- und Lagereinrichtung (32.1) und eine zweite Führungs- und Lagereinrichtung (32.2) angeordnet sind, wobei die zweite Führungs- und Lagereinrichtung (32.2) von der ersten Führungs- und Lagereinrichtung (32.1) in Transportrichtung (TR) beabstandet ist, und an der zweiten Seite (S2) des Grundkörpers (GK) zumindest eine dritte Führungs- und Lagereinrichtung (32.3) angeordnet ist,
wobei die erste und die zweite Führungs- und Lagereinrichtung (32.1, 32.2) um eine jeweilige erste bzw. zweite Gelenkachse (GA1, GA2), die lotrecht zur Mittelebene (ME) ausgerichtet ist, schwenkbar ausgebildet sind
und jeweils zumindest eine erste und eine zweite drehbare Laufrolle (34, 35) aufweisen, deren Rotationsachsen (RA1, RA2) zur jeweiligen Gelenkachse (GA1, GA2) in bezüglich der Transportrichtung (TR) entgegengesetzte Richtungen parallelverschoben sind, wodurch die Rotationsachse (RA1, RA2) einer Laufrolle (34, 35) zur Rotationsachse (RA2, RA1) der jeweils anderen Laufrolle (35, 34) in Transportrichtung (TR) beabstandet ist, und wobei die erste und die zweite Führungs- und Lagereinrichtung (32.1, 32.2) zumindest eine weitere drehbare Laufrolle (36) aufweisen, deren Rotationsachse (RA3) vorzugsweise lotrecht zur jeweiligen Gelenkachse (GA1, GA2) ausgerichtet ist, sodass die Rotationsachse (RA3) der weiteren Laufrolle (36) um die jeweilige Gelenkachse (GA1, GA2) schwenkbar ausgebildet ist,
wobei die dritte Führungs- und Lagereinrichtung (32.3) zumindest eine erste drehbare Laufrolle (34) aufweist, deren Rotationsachse (RA1) parallel zu den Gelenkachsen (GA1, GA2) ausgerichtet ist, und zumindest eine weitere drehbare Laufrolle (36) aufweist, deren Rotationsachse (RA3) vorzugsweise lotrecht zu den Gelenkachsen (GA1, GA2) ausgerichtet ist.

2. Läufer (3) nach Anspruch 1, **dadurch gekennzeichnet, dass** die dritte Führungs- und Lagereinrichtung (32.3) nicht verschwenkbar am Läufer (3) angeordnet ist, wobei die Rotationsachse (RA3) der weiteren Laufrolle (36) vorzugsweise lotrecht zu einer von der ersten und zweiten Gelenkachse (GA1, GA2) aufgespannten Achsebene (AE) ausgerichtet ist und die Rotationsachse (RA1) der ersten drehbaren Laufrolle (34) der dritten Führungs- und Lagereinrichtung (32.3) schneidet.

3. Läufer (3) nach Anspruch 2, **dadurch gekennzeichnet, dass** die dritte Führungs- und Lagereinrichtung (32.3) in Transportrichtung (TR) gesehen mittig zwischen der ersten und der zweiten Gelenkachse (GA1, GA2) am Läufer (3) angeordnet ist, sodass die Rotationsachsen (RA1, RA3) der ersten Laufrolle (34) und der weiteren Laufrolle (36) der dritten Führungs- und Lagereinrichtung (32.3) von der ersten Gelenkachse (GA1) in Transportrichtung (TR) gesehen genauso weit beabstandet sind wie von der zweiten Gelenkachse (GA2).

4. Läufer (3) nach Anspruch 1, **dadurch gekennzeichnet, dass** die dritte Führungs- und Lagereinrichtung (32.3) in Transportrichtung (TR) bezüglich einer zur ersten und zweiten Gelenkachse (GA1, GA2) parallelen dritten Gelenkachse (GA3) verschwenkbar ausgebildet ist und eine zweite drehbare Laufrolle (35) aufweist, wobei die Rotationsachsen (RA1, RA2) der ersten und zweiten Laufrolle (34, 35) der dritten Führungs- und Lagereinrichtung (32.3) zur dritten Gelenkachse (GA3) in bezüglich der Transportrichtung (TR) entgegengesetzte Richtungen parallelverschoben sind, wodurch die Rotationsachse (RA1, RA2) einer Laufrolle (34, 35) zur Rotationsachse (RA2, RA1) der jeweils anderen Laufrolle (35, 34) in Transportrichtung (TR) beabstandet ist, sodass die Rotationsachse (RA3) der weiteren Laufrolle (36) um die dritte Gelenkachse (GA3) schwenkbar ausgebildet ist, und dass insbesondere die dritte Gelenkachse (GA3) der dritten Führungs- und Lagereinrichtung (32.3) in Transportrichtung (TR) gesehen mittig zwischen der ersten und der zweiten Gelenkachse (GA1, GA2) am Läufer (3) angeordnet ist, sodass die dritte Gelenkachse (GA3) von der ersten Gelenkachse (GA1) in Transportrichtung (TR) gesehen genauso weit beabstandet ist wie von der zweiten Gelenkachse (GA2).

5. Läufer (3) nach Anspruch 4, **dadurch gekennzeichnet, dass** an der zweiten Seite (S2) des Grundkörpers (GK) eine vierte Führungs- und Lagereinrichtung (32.4) angeordnet ist, wobei die vierte Führungs- und Lagereinrichtung (32.4) um eine vierte Gelenkachse (GA4), die zur dritten Gelenkachse (GA3) zumindest in Transportrichtung (TR) parallelverschoben ist, schwenkbar ausgebildet ist und zumindest eine erste und eine zweite drehbare Laufrolle (34, 35) aufweist, deren Rotationsachsen (RA1, RA2) zur vierten Gelenkachse (GA4) in bezüglich der Transportrichtung (TR) entgegengesetzte Richtungen parallelverschoben sind, wodurch die Rotationsachse (RA1, RA2) einer Laufrolle (34, 35) zur Rotationsachse (RA2, RA1) der jeweils anderen Laufrolle (35, 34) in Transportrichtung (TR) beabstandet ist,
wobei die vierte Führungs- und Lagereinrichtung (32.4) zumindest eine weitere drehbare Laufrolle (36) aufweist, deren Rotationsachse (RA3) vorzugsweise lotrecht zur vierten Gelenkachse (GA4) ausgerichtet ist, sodass die Rotationsachse (RA3) um die vierte Gelenkachse (GA4) schwenkbar ausgebildet ist, und wobei insbesondere die dritte und die vierte Führungs- und Lagereinrichtung (32.3, 32.4) derart zur ersten und zweiten Führungs- und Lagereinrichtung (32.3, 32.4) bezüglich der Mittelebene (ME) gegenüberliegend angeordnet sind, dass die erste Gelenkachse (GA1) kollinear zur dritten Gelenkachse (GA3) angeordnet ist und die zweite Gelenkachse (GA2) kollinear zur vierten Gelenkachse (GA4) angeordnet ist.

6. Läufer (3) nach einem der vorangehenden Ansprüche 1 bis 5, **dadurch gekennzeichnet, dass** die Rotationsachsen (RA1, RA2) der ersten und zweiten Laufrollen (34, 35) zumindest einer verschwenkbaren Führungs- und Lagereinrichtung (32.1, 32.2, 32.3, 32.4), insbesondere einer jeden verschwenkbaren Führungs- und Lagereinrichtung (32.1, 32.2, 32.3, 32.4) gleich weit von der entsprechenden Gelenkachse (GA1, GA2, GA3, GA4) beabstandet sind.

7. Läufer (3) nach einem der vorangehenden Ansprüche 1 bis 6, **dadurch gekennzeichnet, dass** die Laufrollen (34...36) identisch zueinander ausgebildete Außendurchmesser aufweisen, insbesondere identisch ausgestaltet sind.

8. Läufer (3) nach einem der vorangehenden Ansprüche 1 bis 7, **dadurch gekennzeichnet, dass** zumindest eine verschwenkbare Führungs- und Lagereinrichtung (32.1, 32.2, 32.3, 32.4), insbesondere eine jede verschwenkbare Führungs- und Lagereinrichtung (32.1, 32.2, 32.3, 32.4), jeweils mittels Gleitlager oder Rollenlager (RL1, RL2, RL3, RL4) drehbar um die entsprechende Gelenkachse (GA1, GA2, GA3, GA4) gelagert ist.

9. Läufer (3) nach einem der vorangehenden Ansprüche 1 bis 8, **dadurch gekennzeichnet, dass** zumindest eine Laufrolle (34...36), insbesondere eine jede Laufrolle (34...36), mittels Gleitlager oder Rollenlager (RL5, RL6, RL7) drehbar um die entsprechende Rotationsachse (RA1, RA2, RA3) gelagert sind.

10. Läufer (3) nach einem der vorangehenden Ansprüche 1 bis 9, **dadurch gekennzeichnet, dass** zumindest eine Führungs- und Lagereinrichtung (32.1, 32.2, 32.3, 32.4) in Längsrichtung der jeweiligen Gelenkachse (GA1, GA2, GA3, GA4) beweglich am Grundkörper (GK) angeordnet ist und eine Vorspanneinrichtung (40) aufweist, mittels derer die Führungs- und Lagereinrichtung (32.1, 32.2, 32.3, 32.4) mit einer Vorspannkraft in Richtung der jeweiligen Gelenkachse (GA1, GA2, GA3, GA4) beaufschlagbar ist, und/oder dass die erste, zweite, dritte und/oder vierte Führungs- und Lagereinrichtung (32.1, 32.2, 32.3, 32.4) an jeder Rotationsachse (RA1, RA2), die parallel zu einer Gelenkachse (GA1, GA2, GA3, GA4) ausgerichtet ist, jeweils eine zusätzliche Laufrolle (37, 38) mit paralleler Rotationsachse (RA1, RA2) umfasst.

11. Transportsystem (1) zur Beförderung von Gegenständen entlang einer Transportstrecke (TS),
wenigstens umfassend eine ortsfeste Laufschiene (2) und zumindest einen entlang der Laufschiene (2) bewegbaren Läufer (3) nach einem der Ansprüche 1 bis 13,
wobei an der ortsfesten Laufschiene (2) eine Vielzahl von ortsfesten Spulenelementen (9) vorgesehen ist, die mit dem zumindest einen Permanentmagneten (8) des Läufers (3) einen elektromagnetischen Antrieb (4) zum Antreiben des zumindest einen Läufers (3) mittels elektromagnetischer Kräfte ausbilden,
wobei die Laufschiene (2) zumindest abschnittsweise entlang der Transportstrecke (TS) eine erste Führungsschiene (30) und eine der ersten Führungsschiene (30) bezüglich der Mittelebene (ME) des Läufers (3) gegenüberliegende zweite Führungsschiene (31) aufweist,
wobei die zumindest eine erste und zumindest eine zweite drehbare Laufrolle (34, 35) der ersten und zweiten Führungs- und Lagereinrichtung (32.1, 32.2) des zumindest einen Läufers (3) von einer parallel zur ersten und zweiten Gelenkachse (GA1, GA2) ausgerichteten ersten Führungsfläche (30.1) der ersten Führungsschiene (30) des Transportsystems (1) geführt sind
und die zumindest eine weitere drehbare Laufrolle (36) der ersten und zweiten Führungs- und Lagereinrichtung (32.1, 32.2) von einer zur ersten Führungsfläche (30.1) vorzugsweise lotrechten zweiten Führungsfläche (30.2) der ersten Führungsschiene (30) des Transportsystems (1) geführt ist,
wobei die zumindest eine erste drehbare Laufrolle (34) der dritten Führungs- und Lagereinrichtung (32.3) des zumindest einen Läufers (3) von einer parallel zur ersten und zweiten Gelenkachse (GA1, GA2) ausgerichteten ersten Führungsfläche (31.1) der zweiten Führungsschiene (31) des Transportsystems (1) geführt ist
und die zumindest eine weitere drehbare Laufrolle (36) der dritten Führungs- und Lagereinrichtung (32.3) von einer zur ersten Führungsfläche (31.1) vorzugsweise lotrechten zweiten Führungsfläche (31.2) der zweiten Führungsschiene (31) geführt ist.

12. Transportsystem (1) nach Anspruch 11, wobei die zumindest eine zweite drehbare Laufrolle (35) der dritten Führungs- und Lagereinrichtung (32.3) des Läufers (3) von der ersten Führungsfläche (31.1) der zweiten Führungsschiene (31) des Transportsystems (1) geführt ist.

13. Transportsystem (1) nach einem der Ansprüche 11 oder 12, wobei die zumindest eine erste und zweite drehbare Laufrolle (34, 35) der vierten Führungs- und Lagereinrichtung (32.4) des Läufers (3) von der ersten Führungsfläche (31.1) der zweiten Führungsschiene (31) des Transportsystems (1) geführt sind und die zumindest eine weitere drehbare Laufrolle (36) der vierten Führungs- und Lagereinrichtung (32.4) von der zweiten Führungsfläche (31.2) der zweiten Führungsschiene (31) des Transportsystems (1) geführt ist.

14. Transportsystem (1) nach einem der Ansprüche 11 bis 13, **gekennzeichnet durch** mehrere unabhängig und autonom zueinander entlang der Transportstrecke (TS) bewegbare Läufer (3), wobei der elektromagnetische Antrieb (4) als Linearantrieb, vorzugsweise als Langstator-Linearantrieb ausgebildet ist.

15. Transportsystem (1) nach einem der vorangehenden Ansprüche 11 bis 14, aufweisend zumindest einen Läufer gemäß Anspruch 13, **dadurch gekennzeichnet, dass** die ersten, zweiten und jeweils zusätzlichen Laufrollen (34, 35, 37), deren Rotationsachse (RA1, RA2) parallel zu den vorhandenen Gelenkachsen (GA1, GA2, GA3, GA4) ausgerichtet ist, zwischen der ersten Führungsfläche (30.1, 31.1) und einer der ersten Führungsfläche (30.1, 31.1) gegenüberliegenden dritten Führungsfläche (30.3, 31.3) der jeweiligen Führungsschiene (30, 31) geführt sind,
wobei jeweils eine erste bzw. zweite Laufrolle (34, 35) an der ersten Führungsfläche (30.1, 31.1) und die jeweils zusätzliche Laufrolle (37) an der dritten Führungsfläche (30.3, 31.3) anliegen und zueinander vorgespannt geführt sind,
wobei die Abschnitte der ersten Führungsfläche (30.1, 31.1) und der dritten Führungsfläche (30.3, 31.3), in denen die Laufrollen (34, 35, 37) anliegen, entlang der vorhandenen Rotationsachsen (RA1, RA2) zueinander versetzt und einander gegenüberliegend sind.
